# EUROPEAN PATENT APPLICATION

(11) **EP 4 780 132 A1**
(43) Date of publication of application: **22.07.2026**
(21) Application number: 23952236.0
(22) Date of filing: 13.09.2023
(51) Int. Cl.: H04W 76/15, H04W 16/28, H04W 28/04, H04W 28/16

(54) **ACCESS POINT, TRANSMISSION STATION, AND RECEPTION STATION**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Meissner Bolte Partnerschaft mbB
(86) International application number: PCT/JP2023/033438
(87) International publication number: WO 2025/057343

(57) **Abstract**

An access point of an embodiment is included in an information communication system that includes a transmitting station, a plurality of access points, and a receiving station, and distributes traffic among the plurality of access points and transfers data from the transmitting station to the receiving station. The access point includes a reception status management unit and a transmission buffer control unit. The reception status management unit updates reception success/failure information indicating the reception status of the data stored in a transmission buffer based on the starting sequence number and the bitmap included in the received reception confirmation frame. The transmission buffer control unit causes the transmission buffer to store data received via the first wireless link or the third wireless link, determines data to be transmitted via the first wireless link or the second wireless link among the data stored in the transmission buffer based on the transmission window, and shifts the transmission window based on the starting sequence number included in the reception confirmation frame

## Description

### [Technical Field]

Embodiments relate to an access point, a transmitting station, and a receiving station.

### [Background Art]

A wireless local area network (LAN) is known as an information communication system that wirelessly connects an access point (AP) and a terminal apparatus. A terminal apparatus can access a network via an access point within a communication area using a wireless LAN. The ultra high reliability-study group (UHR-SG), which is studying the next generation of wireless LAN systems based on the IEEE 802.11 standard, is considering a multi-AP function that allows multiple access points to work in coordination.

As one aspect of the multi-AP function, a plurality of second access points connected to the first access point cooperate to perform data communication between the first access point and the terminal apparatus. As an example of cooperative operation among a plurality of second access points, offloading may be performed, in which data exchanged between a first access point and a non-access point multi-link device (non-AP_MLD) is distributed as traffic to the respective second access points. The non-AP_MLD corresponds to a functional block that manages wireless connections or the like using a multi-AP function in a terminal apparatus.

In addition, in the 802.11 standard, sharing of reception status using BlockAck is performed between a device on the data transmission side (transmitting station) and a device on the data reception side (receiving station). This allows the transmitting station to confirm that data has been delivered to the receiving station and to control the transmission buffer that stores data to be transmitted to the receiving station. For example, in the buffer control using the BlockAck, window control is performed to delete the data confirmed to be received from the transmission buffer or to transmit the next data.

### [Citation List]

### [Non Patent Literature]

[NPL 1] IEEE Std 802.11TM-2020, "6.3.27 Block Ack", p436-p442, December 2020

### [Summary of Invention]

### [Technical Problem]

However, in a case where a multi-AP function is utilized, not all traffic necessarily passes through each of the second access points. Accordingly, each second access point is unable to confirm the reception of data that does not pass through itself, and therefore cannot appropriately shift the window of the transmission buffer. In this way, in a case where traffic is distributed to a plurality of second access points by the multi-AP function, buffer control at the second access point is listed as one of the problems.

Therefore, an object of the present invention is to provide an access point, a transmitting station, and a receiving station that can properly control the window of the buffer in the entire information communication system in a case where a multi-AP function is used.

### [Solution to Problem]

An access point of an embodiment is an access point included in an information communication system including a transmitting station, the access point with which a first wireless link with the transmitting station is established, other access point with which a second wireless link with the transmitting station is established, and a receiving station with which a third wireless link with the access point and a fourth wireless link with the other access point are established, in which traffic is distributed between the access point and the other access point, and data is transferred from the transmitting station to the receiving station. The access point includes a reception status management unit and a transmission buffer control unit. The reception status management unit is configured to update reception success/failure information indicating a reception status of data stored in a transmission buffer based on a starting sequence number and a bitmap included in a reception confirmation frame received via the first wireless link or the third wireless link. The transmission buffer control unit is configured to store data received via the first wireless link or the third wireless link in the transmission buffer, determine data to be transmitted via the first wireless link or the second wireless link from among the data stored in the transmission buffer based on a transmission window, and shift the transmission window based on a starting sequence number included in the reception confirmation frame.

### [Advantageous Effects of Invention]

According to the present invention, it is possible to provide an access point, a transmitting station, and a receiving station that can properly control a window of a transmission buffer in the entire information communication system in a case where a multi-AP function is used.

### [Brief Description of Drawings]

[Fig. 1] Fig. 1 is a block diagram illustrating an example of an entire configuration of an information communication system according to an embodiment.
[Fig. 2] Fig. 2 is a block diagram illustrating an example of a hardware configuration of a sharing access point included in the information communication system according to the embodiment.
[Fig. 3] Fig. 3 is a block diagram illustrating an example of a hardware configuration of a shared access point included in the information communication system according to the embodiment.
[Fig. 4] Fig. 4 is a block diagram illustrating an example of a hardware configuration of a terminal apparatus included in the information communication system according to the embodiment.
[Fig. 5] Fig. 5 is a block diagram illustrating an example of a functional configuration of the sharing access point included in the information communication system according to the embodiment.
[Fig. 6] Fig. 6 is a block diagram illustrating an example of a functional configuration of a frame processing unit included in the sharing access point included in the information communication system according to the embodiment.
[Fig. 7] Fig. 7 is a block diagram illustrating an example of a functional configuration of the shared access point included in the information communication system according to the embodiment.
[Fig. 8] Fig. 8 is a block diagram illustrating an example of a functional configuration of a frame processing unit included in the shared access point included in the information communication system according to the embodiment.
[Fig. 9] Fig. 9 is a block diagram illustrating an example of a functional configuration of a terminal apparatus included in the information communication system according to the embodiment.
[Fig. 10] Fig. 10 is a block diagram illustrating an example of a functional configuration of a frame processing unit included in the terminal apparatus included in the information communication system according to the embodiment.
[Fig. 11] Fig. 11 is a block diagram illustrating an example of a functional configuration of an affiliated STA included in the terminal apparatus included in the information communication system according to the embodiment.
[Fig. 12] Fig. 12 is a schematic diagram illustrating an example of a MAC sublayer architecture in the information communication system according to the embodiment.
[Fig. 13] Fig. 13 is a table illustrating an example of a configuration of a transmission buffer of a transmitting station in the information communication system according to the embodiment.
[Fig. 14] Fig. 14 is a time chart illustrating an example of a setup sequence for multi-AP connection in the information communication system according to the embodiment.
[Fig. 15] Fig. 15 is a block diagram illustrating an example of a data transfer method in the information communication system according to the embodiment.
[Fig. 16] Fig. 16 is a flowchart illustrating an example of a window control method of a sharing access point included in the information communication system according to the embodiment.
[Fig. 17] Fig. 17 is a flowchart illustrating an example of a window control method of the shared access point included in the information communication system according to the embodiment.
[Fig. 18] Fig. 18 is a schematic diagram illustrating a specific example of a management method of a transmission buffer of the shared access point included in the information communication system according to the embodiment.
[Fig. 19] Fig. 19 is a flowchart illustrating an example of a window control method of the terminal apparatus provided in the information communication system according to the embodiment.
[Fig. 20A] Fig. 20A is a time chart illustrating a specific example of a data transfer sequence of the information communication system according to the embodiment.
[Fig. 20B] Fig. 20B is a time chart illustrating a specific example of the data transfer sequence of the information communication system according to the embodiment.

### [Description of Embodiments]

An information communication system according to an embodiment will be described below with reference to the drawings. Each embodiment exemplifies a device or method for embodying the technical idea of the invention. The drawings may be schematic or conceptual. In the following description, components having substantially the same function and configuration are denoted by the same reference numerals. The numbers following the letters that constitute the reference numerals are used to distinguish between elements that are referred to by reference numerals including the same letters and have the same configuration. Similarly, each of the letters following the number and the "hyphen + number" that constitute the reference number are used to distinguish between elements that are referred to by the reference numerals including the same numbers and have the same configuration. If there is no need to distinguish between elements indicated by reference signs including the same letters or numbers, these elements are referred to by reference signs including only letters or numbers. Hereinafter, "access point" may be appropriately abbreviated as "AP". In the present specification, a first access point in a multi-AP function is referred to as a "sharing access point (sharing AP)", and a second access point in the multi-AP function is referred to as a "shared access point (shared AP)".

### <1> Configuration

First, the configuration of an information communication system 1 according to the embodiment will be described. In the following description, it will be assumed that a multi-AP connection using a multi-AP function is established in the information communication system 1.

### <1-1> Overall Configuration of Information Communication System 1

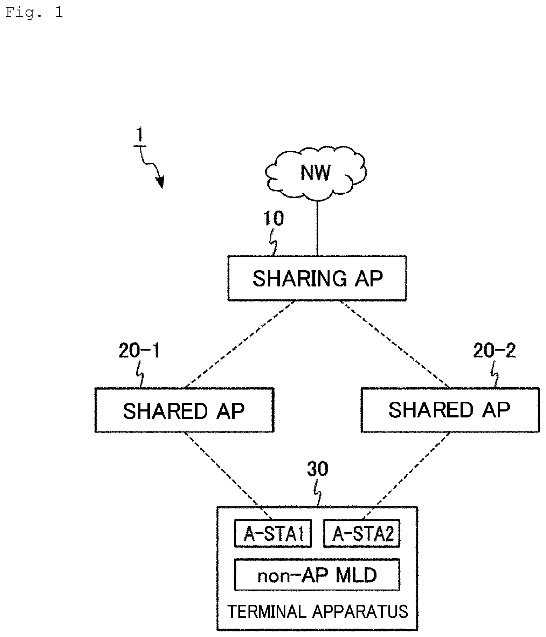

Fig. 1 is a block diagram illustrating an example of an overall configuration of the information communication system 1 according to the embodiment. As illustrated in Fig. 1, the information communication system 1 includes a sharing AP 10, a plurality of shared APs 20, and a terminal apparatus 30.

The sharing AP 10 is a type of wireless LAN access point. The sharing AP 10 is connected to a network NW. The sharing AP 10 is configured to be capable of wired or wireless communication with a server (not illustrated) on the network NW and wireless communication with each of the plurality of shared AP 20. The sharing AP 10 establishes a multi-AP connection with a non-AP_MLD of the terminal apparatus 30.

The shared AP 20 is a type of wireless LAN access point. The shared AP 20 is configured to wirelessly communicate with each of the sharing AP 10 and the terminal apparatus 30. The plurality of shared APs 20 are installed at positions separated from each other and have mutually different communication available areas. The communication available area of each shared AP 20 may have a portion overlapping with the communication available areas of other shared AP 20. Fig. 1 illustrates two shared APs 20-1 and 20-2 connected to the sharing AP 10.

The terminal apparatus 30 is a wireless terminal such as a smartphone or a personal computer (PC). The terminal apparatus 30 includes a plurality of affiliated stations (affiliated STAs) (hereinafter, also referred to as "A-STA") and a non-AP_MLD. The plurality of affiliated STAs includes an A-STA 1 wirelessly connected to a shared AP 20-1 and an A-STA 2 wirelessly connected to a shared AP 20-2. The wireless connection between the shared AP 20 and the affiliated STA corresponds to a connection between a conventional pair of access points and the STA. Each A-STA can switch a connection destination to another shared AP 20 as the terminal apparatus 30 moves. The non-AP_MLD is a multi-link device (MLD) that manages link statuses and wireless communications for each of the plurality of A-STAs. The non-AP_MLD can establish the multi-AP connection with the sharing AP 10 via the plurality of affiliated STAs and the plurality of shared AP 20, and exchange data and the like.

In the information communication system 1, when establishing the multi-AP connection, information on a plurality of shared APs 20 under the control of the sharing AP 10 and information on a plurality of affiliated STAs under the control of the non-AP_MLD are mutually exchanged between the sharing AP 10 and the non-AP_MLD. Thus, the information communication system 1 can collectively perform comprehensive connections targeting the plurality of shared AP 20 and the plurality of affiliated STAs between the sharing AP 10 and the non-AP_MLD.

Wireless communications used in the information communication system 1 conform to, for example, the IEEE 802.11 standard. The IEEE 802.11 standard has a wireless communication function based on the open systems interconnection (OSI) reference model. In the OSI reference model, wireless communication functions are divided into seven layers (Layer 1: physical layer, Layer 2: data link layer, Layer 3: network layer, Layer 4: transport layer, Layer 5: session layer, Layer 6: presentation layer, and Layer 7: application layer). The data link layer includes a logical link control (LLC) sublayer and a media access control (MAC) sublayer. As frequency bands used for wireless communication in the information communication system 1, for example, the 2.4 GHz band, 5 GHz band, 6 GHz band, 45 GHz band, and 60 GHz band may be used. A plurality of channels may be allocated to each frequency band. Different channels or the same channel may be allocated to the A-STA 1 and the A-STA 2. In addition, the same frequency band may be used for both the A-STA 1 and the A-STA 2, or different frequency bands may be used.

### <1-2> Hardware Configuration of Information Communication System 1

The hardware configuration of the information communication system 1 according to the embodiment will be described below.

### <1-2-1> Hardware Configuration of Sharing AP 10

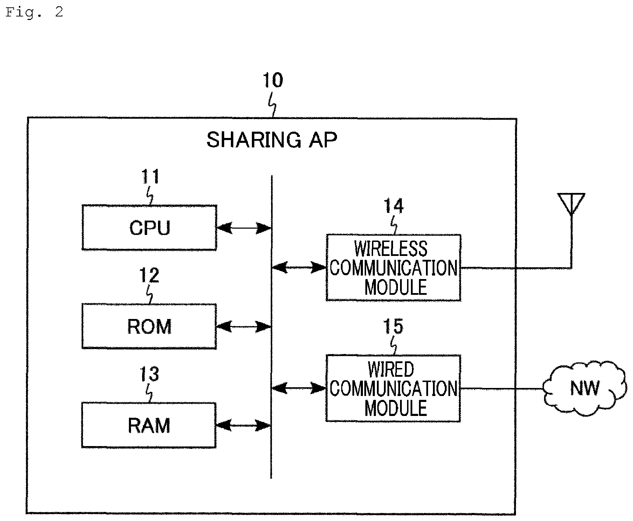

Fig. 2 is a block diagram illustrating an example of a hardware configuration of the sharing AP 10 included in the information communication system 1 according to the embodiment. As illustrated in Fig. 2, the sharing AP 10 includes, for example, a central processing unit (CPU) 11, a read only memory (ROM) 12, a random access memory (RAM) 13, a wireless communication module 14, and a wired communication module 15.

The CPU 11 is an integrated circuit capable of executing various programs, and controls the overall operation of the sharing AP 10. The ROM 12 is, for example, a non-volatile semiconductor memory, and stores a program and control data for controlling the sharing AP 10. The RAM 13 is, for example, a volatile semiconductor memory, and is used as a working area for the CPU 11. The wireless communication module 14 is configured to be able to transmit and receive wireless signals via an antenna. The wireless communication module 14 is used for transmitting and receiving data and the like with each shared AP 20. The wired communication module 15 is a circuit used for transmitting and receiving data using wired signals. The wired communication module 15 is configured to be connectable to a network (NW).

Note that the sharing AP 10 may have other hardware configurations. For example, in a case where the sharing AP 10 is wirelessly connected to the network (NW), the wired communication module 15 may be omitted from the sharing AP 10. In a case where the sharing AP 10 is wired to the network (NW), the wireless communication module 14 may be omitted from the sharing AP 10. The antenna may be built into the sharing AP 10 or externally connected thereto.

### <1-2-2> Hardware Configuration of Shared AP 20

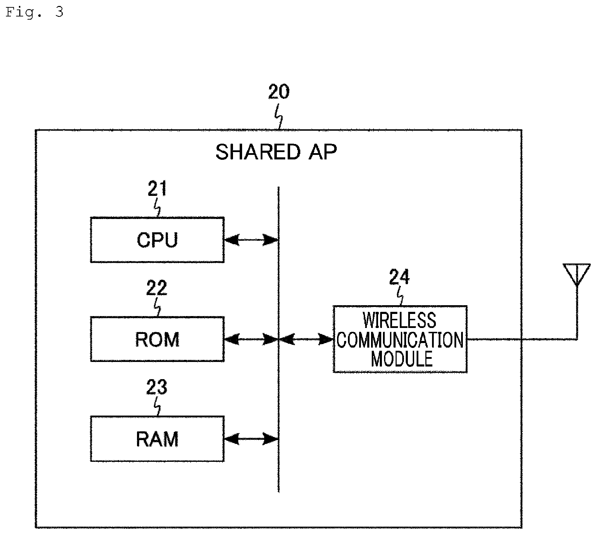

Fig. 3 is a block diagram illustrating an example of a hardware configuration of the shared AP 20 included in the information communication system 1 according to the embodiment. As illustrated in Fig. 3, as illustrated in Fig. 2, the shared AP 20 includes, for example, a CPU 21, a ROM 22, a RAM 23, and a wireless communication module 24.

The CPU 21 is an integrated circuit capable of executing various programs, and controls the overall operation of the shared AP 20. The ROM 22 is, for example, a non-volatile semiconductor memory, and stores programs and control data for controlling the shared AP 20. The RAM 23 is, for example, a volatile semiconductor memory, and is used as a working area for the CPU 21. The wireless communication module 24 is configured to be able to transmit and receive wireless signals via an antenna. The wireless communication module 24 is used for transmitting and receiving data or the like to and from the sharing AP 10 and for transmitting and receiving data or the like to and from the terminal apparatus 30.

Note that the shared AP 20 may have other hardware configurations. For example, the antenna may be built into the shared AP 20, or may be connected externally.

### <1-2-3> Hardware Configuration of Terminal Apparatus 30

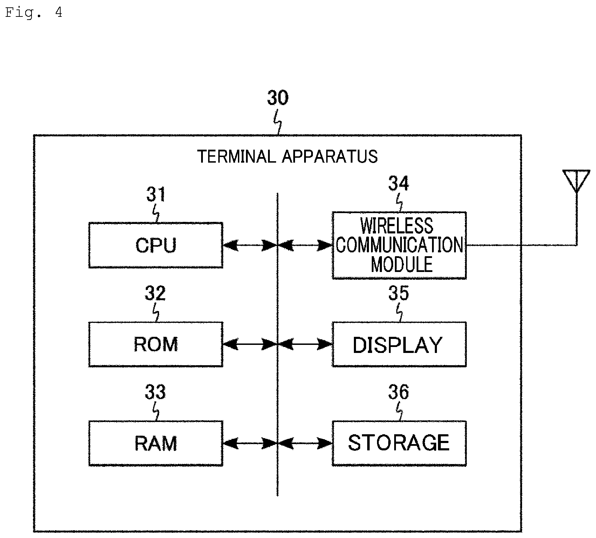

Fig. 4 is a block diagram illustrating an example of a hardware configuration of the terminal apparatus 30 included in the information communication system 1 according to the embodiment. As illustrated in Fig. 4, the terminal apparatus 30 includes, for example, a CPU 31, a ROM 32, a RAM 33, a wireless communication module 34, a display 35, and a storage 36.

The CPU 31 is an integrated circuit capable of executing various programs, and controls the overall operation of the terminal apparatus 30. The ROM 32 is, for example, a non-volatile semiconductor memory, and stores a program and control data for controlling the terminal apparatus 30. The RAM 33 is, for example, a volatile semiconductor memory and is used as a work area of the CPU 31. The wireless communication module 34 is configured to be able to transmit and receive wireless signals via an antenna. The wireless communication module 34 is used for transmitting and receiving data and the like with the shared AP 20. The display 35 is, for example, a liquid crystal display (LCD) or an electro-luminescence (EL) display. The display 35 displays, for example, a graphical user interface (GUI) and the like corresponding to application software. The storage 36 is a non-volatile storage device, and stores, for example, system software of the terminal apparatus 30.

Note that the terminal apparatus 30 may have other hardware configurations. For example, in a case where the terminal apparatus 30 is the Internet of Things (IoT) terminal or the like, the display 35 may be omitted from the terminal apparatus 30. The display 35 may have a function as an input interface of the terminal apparatus 30. The antenna may be built into the terminal apparatus 30 or may be externally connected.

### <1-3> Functional Configuration of Information Communication System 1

The functional configuration of the information communication system 1 according to the embodiment will be described below.

### <1-3-1> Functional Configuration of Sharing AP 10

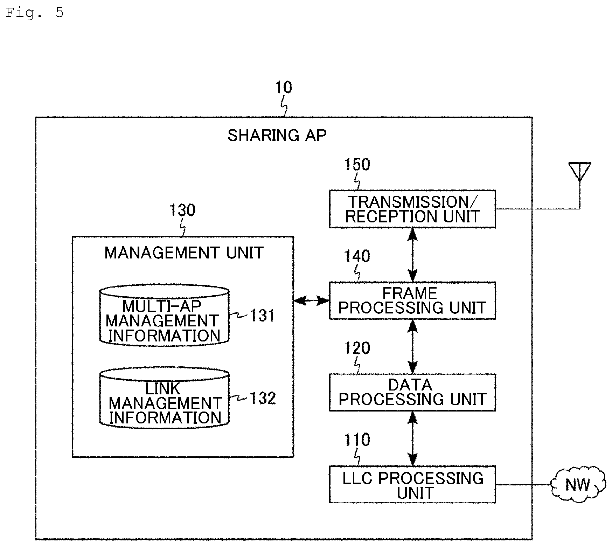

Fig. 5 is a block diagram illustrating an example of a functional configuration of the sharing AP 10 included in the information communication system 1 according to the embodiment. As illustrated in Fig. 5, the sharing AP 10 functions as a computer including, for example, an LLC processing unit 110, a data processing unit 120, a management unit 130, a frame processing unit 140, and a transmission/reception unit 150. The LLC processing unit 110 is a functional block that executes processing corresponding to the LLC sublayer of Layer 2 and Layer 3 to Layer 7. The data processing unit 120, the management unit 130, and the frame processing unit 140 are functional blocks that execute processing corresponding to the MAC sublayer of Layer 2. The transmission/reception unit 150 is a functional block that executes processing corresponding to Layer 1.

The LLC processing unit 110 generates an LLC packet by adding, for example, a destination service access point (DSAP) header, a destination service access point (SSAP) header, and the like to data received from the network NW. In addition, the LLC processing unit 110 inputs the generated LLC packet to the data processing unit 120. In addition, the LLC processing unit 110 extracts the data from the LLC packet input from the data processing unit 120. Further, the LLC processing unit 110 transmits the extracted data to a network NW.

The data processing unit 120 adds a MAC header to the LLC packet input from the LLC processing unit 110 to generate a MAC frame. Then, the data processing unit 120 inputs the generated MAC frame to the frame processing unit 140. In addition, the data processing unit 120 extracts the LLC packet from the MAC frame input from the frame processing unit 140. Then, the data processing unit 120 inputs the extracted LLC packet to the LLC processing unit 110. The MAC frame including data is also called the "data frame".

The management unit 130 performs establishment of wireless connection (wireless link), mapping of data types and links, and setting up of the BlockAck with the non-AP_MLD of the terminal apparatus 30. For example, the management unit 130 executes multi-AP association processing in response to a multi-AP association request from the terminal apparatus 30. For example, in a case where the terminal apparatus 30 uses two A-STA 1 and A-STA 2, the A-STA 1 establishes a wireless link with the shared AP 20-1 and the A-STA 2 establishes a wireless link with the shared AP 20-2 by the multi-AP association processing.

Further, the management unit 130 manages multi-AP management information 131 and link management information 132. The multi-AP management information 131 includes information regarding an access point (that is, the sharing AP 10 and the shared APs 20-1 and 20-2) used for the multi-AP connection and the terminal apparatus 30. For example, the multi-AP management information 131 is provided for each terminal apparatus 30 that establishes a multi-AP connection. The link management information 132 includes information regarding a status of a link established in the multi-AP connection.

In a case where the MAC frame is input from the data processing unit 120 or the management unit 130, the frame processing unit 140 outputs the input MAC frame to the transmission/reception unit 150. Furthermore, in a case where the MAC frame is input from the transmission/reception unit 150, the frame processing unit 140 outputs the input frame to the data processing unit 120 or the management unit 130 depending on the type of the frame. For example, in a case where the data frame is input from the transmission/reception unit 150, the frame processing unit 140 outputs the input frame to the data processing unit 120. In a case where the management frame or the control frame is input from the transmission/reception unit 150, the frame processing unit 140 outputs the input frame to the management unit 130. The management frame or the control frame includes, for example, management information. The management information may include notification information to any of the shared AP 20 and the terminal apparatus 30, control information related to control of operation of any of the shared AP 20 and the terminal apparatus 30, and the like.

The transmission/reception unit 150 transmits/receives data, management information, and the like to/from each of a plurality of shared APs 20 belonging to the sharing AP 10. The transmission/reception unit 150 is provided with a wireless signal processing unit one by one for each of the plurality of shared APs 20 belonging to the sharing AP 10, for example. Each wireless signal processing unit of the transmission/reception unit 150 is configured to transmit and receive wireless signals using different frequency bands or channels from one another.

Each wireless signal processing unit of the transmission/reception unit 150 generates a wireless frame by adding a preamble or the like to the MAC frame input from the frame processing unit 140, and converts the generated wireless frame into a wireless signal. Then, each wireless signal processing unit transmits (radiates) the converted wireless signal to the shared AP 20 wirelessly connected via an antenna. In addition, each wireless signal processing unit of the transmission/reception unit 150 also converts the wireless signal received via the antenna from one of the shared APs 20 into a wireless frame. Then, each wireless signal processing unit extracts the MAC frame from the converted wireless frame, and outputs the extracted MAC frame to the frame processing unit 140. The transmission/reception unit 150 may use multicast or broadcast in a case of simultaneously notifying the plurality of shared APs 20. The multicast or broadcast may be used, for example, for transmission of a beacon or the like.

The multi-AP management information 131 includes information regarding a frequency band, a channel, an operation parameter, access categories, and the like. The frequency band information indicates, for example, a frequency band used by an A-STA for a wireless link. The channel information indicates, for example, a channel that an A-STA will use for a wireless link. The operation parameter information includes, for example, CWmin, CWmax, an arbitration interframe space (AIFS), and transmission opportunity (TXOP) Limit. CWmin and CWmax indicate the minimum and maximum values of a contention window, respectively. The contention window is a parameter used to calculate backoff that is a transmission waiting time for collision avoidance. AIFS is a fixed transmission waiting time set for each traffic access category. The TXOPLimit indicates an upper limit of the channel occupation period TXOP. The access category information includes, for example, "voice (VO)", "video (VI)", "best effort (BE)", and "background (BK)", and "low latency (LL)".

The link management information 132 may include information indicating whether the wireless link is enabled or disabled. The multi-AP management information 131 and the link management information 132 may be integrated. The frame processing unit 140 may output data or the like to be transmitted to the shared AP 20-1 to a wireless signal processing unit associated with the shared AP 20-1, and output data or the like to be transmitted to the shared AP 20-2 to a wireless signal processing unit associated with the shared AP 20-2, based on the multi-AP management information 131. The frame processing unit 140 may determine a transmission destination of the MAC frame input from the data processing unit 120 according to a traffic identifier (TID) associated with the access category. Thus, the processing of associating the TID with the link is also referred to as the "TID-link mapping". The transmission/reception unit 150 may be provided with a wireless signal processing unit assigned to transmission/reception of data or the like, and a wireless signal processing unit assigned to transmission of management information.

### (Functional Configuration of Frame Processing Unit 140 of Sharing AP 10)

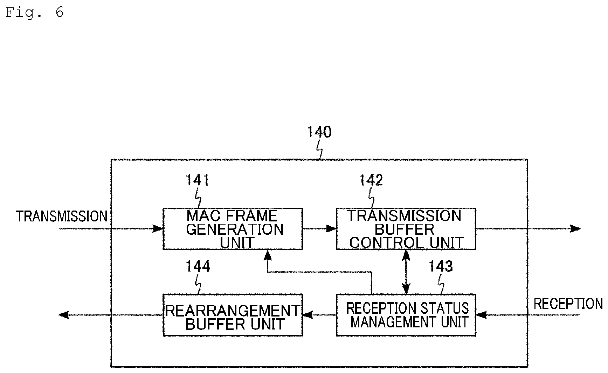

Fig. 6 is a block diagram illustrating an example of a functional configuration of the frame processing unit 140 included in the sharing AP 10 included in the information communication system 1 according to the embodiment. As illustrated in Fig. 6, the frame processing unit 140 includes a MAC frame generation unit 141, a transmission buffer control unit 142, a reception status management unit 143, and a rearrangement buffer unit 144.

The MAC frame generation unit 141 generates a BlockAck including the input bitmap and outputs it to the transmission buffer control unit 142 in a case where there is the bitmap input from the reception status management unit 143. The MAC frame generation unit 141 generates a MAC frame by adding a header or the like and outputs it to the transmission/reception unit 150 in a case where the downlink data or the like is input from the data processing unit 120. The MAC header included in the MAC frame includes a sequence number SN assigned to identify data.

The transmission buffer control unit 142 outputs the MAC frame input from the MAC frame generation unit 141 to the transmission/reception unit 150. In a case where the input MAC frame is downlink data, the transmission buffer control unit 142 associates a sequence number SN with the MAC frame, stores the MAC frame in the transmission buffer, and outputs it to the transmission/reception unit 150. In addition, the transmission buffer control unit 142 may also notify the reception status management unit 143 of the sequence number SN of the data stored in the transmission buffer. The data frame handling in the transmission buffer control unit 142 is similar to the uplink data handling in the non-AP_MLD.

The reception status management unit 143 determines whether the MAC frame input from the transmission/reception unit 150 has been correctly received based on the frame check sequence in a case where the MAC frame is from the shared AP 20 connected to its own station. The reception status management unit 143 outputs correctly received data to the rearrangement buffer unit 144. In addition, the reception status management unit 143 generates or updates the reception success/failure information for managing the result of the reception success/failure for each sequence number SN based on the information of the sequence number SN notified from the transmission buffer control unit 142. Then, the reception status management unit 143 updates the reception success/failure information based on the result of the reception success/failure. In a case of receiving the BlockAck request, the reception status management unit 143 generates a bitmap based on the reception success/failure information, and outputs it to the MAC frame generation unit 141.

The rearrangement buffer unit 144 stores the MAC frames input from the reception status management unit 143. Then, in a case where the sequence number SN of the stored MAC frames can be received in sequence without missing from the beginning, the rearrangement buffer unit 144 outputs the MAC frames received in sequence to the data processing unit 120. For example, the rearrangement buffer unit 144 may control the reception window of the MAC frames (data) to be stored based on the starting sequence number SSN included in the BlockAck from which the terminal apparatus 30 is the transmission source. The reception window indicates a sequence number SN and a reception status of data transferred from the terminal apparatus 30 in a case where the sharing AP 10 receives uplink traffic. In this case, the rearrangement buffer unit 144 outputs data of the sequence number SN before the starting sequence number SSN included in the BlockAck to the upper layer, and deletes (discards) the data output to the upper layer from the rearrangement buffer unit 144.

### <1-3-2> Functional Configuration of Shared AP 20

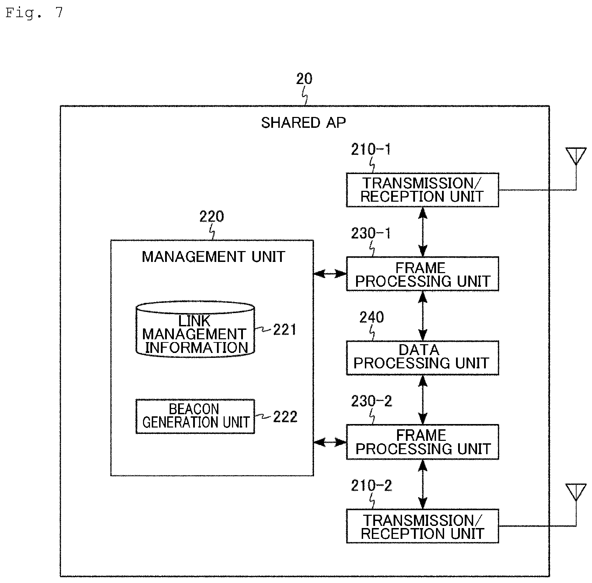

Fig. 7 is a block diagram illustrating an example of a functional configuration of the shared AP 20 included in the information communication system 1 according to the embodiment. As illustrated in Fig. 7, the shared AP 20 functions as a computer including, for example, transmission/reception units 210-1 and 210-2, a management unit 220, frame processing units 230-1 and 230-2, and a data processing unit 240. The transmission/reception unit 210-1 and 210-2 are functional blocks that perform processing corresponding to Layer 1. The management unit 220 and the frame processing units 230-1 and 230-2 are functional blocks which execute processing corresponding to the MAC sublayer of Layer 2.

The transmission/reception unit 210-1 transmits/receives data, management information, and the like to/from the sharing AP 10 by wireless communication. The transmission/reception unit 210-2 transmits/receives data, management information, and the like to/from the terminal apparatus 30 by wireless communication. The transmission/reception units 210-1 and 210-2 are associated with the frame processing units 230-1 and 230-2 respectively. Each of the transmission/reception units 210-1 and 210-2 includes a wireless signal processing unit. In the shared AP 20, it is preferable that the wireless signal processing unit of the transmission/reception unit 210-1 and the wireless signal processing unit of the transmission/reception unit 210-2 is configured to use different frequency bands or channels.

The wireless signal processing unit of the transmission/reception unit 210-1 generates a wireless frame by adding a preamble or the like to the MAC frame (such as a data frame or a management frame) input from the frame processing unit 230-1. Then, the wireless signal processing unit of the transmission/reception unit 210-1 converts the generated wireless frame into a wireless signal, and transmits (radiates) the converted wireless signal to the sharing AP 10 via an antenna. In addition, the wireless signal processing unit of the transmission/reception unit 210-1 converts the wireless signal received from the sharing AP 10 via the antenna into a wireless frame. Then, the wireless signal processing unit of the transmission/reception unit 210-1 extracts a MAC frame from the converted wireless frame, and outputs the extracted MAC frame to the frame processing unit 230-1.

The wireless signal processing unit of the transmission/reception unit 210-2 generates a wireless frame by adding a preamble or the like to the MAC frame (such as a data frame or a management frame) input from the frame processing unit 230-2. Then, the wireless signal processing unit of the transmission/reception unit 210-2 converts the generated wireless frame into a wireless signal, and transmits (radiates) the converted wireless signal to the terminal apparatus 30 via an antenna. In addition, the wireless signal processing unit of the transmission/reception unit 210-2 converts a wireless signal received from the terminal apparatus 30 via the antenna into a wireless frame. The wireless signal processing unit of the transmission/reception unit 210-2 extracts the MAC frame from the converted wireless frame, and outputs the extracted MAC frame to the frame processing unit 230-2.

The management unit 220 controls establishment of wireless connection (wireless link) between the sharing AP 10 and the non-AP MLD of the terminal apparatus 30 in the multi-AP connection. In addition, the management unit 220 manages the generation and distribution of beacons necessary for multi-AP connection and the status of a wireless link between an A-AP of the shared AP 20 and an A-STA of the terminal apparatus 30 in the multi-AP connection based on the notification from the sharing AP 10. In addition, the management unit 220 also includes link management information 221 and a beacon generation unit 222.

The link management information 221 stores management information regarding a status of a wireless link used in the multi-AP connection. In addition, the link management information 221 includes, for example, an identifier of the sharing AP 10 to which the own station belongs and an identifier of the A-STA of the terminal apparatus 30 that establishes a wireless link with the own station. The link management information 221 may store information included in the multi-AP management information 131 and the link management information 132. The management unit 220 manages enablement and disablement of the wireless link using the link management information 221.

The beacon generation unit 222 generates a beacon frame or the like including information regarding the multi-AP connection based on the management information received from the sharing AP 10. The beacon generation unit 222 reports the generated beacon frame to the terminal apparatus 30 via the frame processing unit 230-1 and the transmission/reception unit 210-1. The beacon frame includes, for example, information on the sharing AP 10, information on the shared AP 20 of the own station, and information on the shared AP 20 of the other station included in the multi-AP connection. The beacon frame may include the multi-AP management information 131, the link management information 132, and the like transferred from the sharing AP 10. The transmission of the beacon frame may be performed broadcast or multicast.

The frame processing unit 230-1 outputs an input frame to the transmission/reception unit 210-1 in a case where the MAC frame is input from the data processing unit 240. The frame processing unit 230-1 outputs an input MAC frame to the management unit 220 or the data processing unit 240 depending on a frame type in a case where the MAC frame is input from the transmission/reception unit 210-1. For example, in a case where a data frame is input from the transmission/reception unit 210-1, the frame processing unit 230-1 outputs the input frame to the data processing unit 240. The frame processing unit 230-1 outputs the input frame to the management unit 220 in a case where the management frame or the control frame for the own station is input from the transmission/reception unit 210-1.

The frame processing unit 230-2 outputs the input frame to the transmission/reception unit 210-2 in a case where the MAC frame is input from the data processing unit 240. The frame processing unit 230-2 outputs an input MAC frame to the management unit 220 or the data processing unit 240 depending on a frame type in a case where the MAC frame is input from the transmission/reception unit 210-2. For example, in a case where a data frame is input from the transmission/reception unit 210-2, the frame processing unit 230-2 outputs the input frame to the data processing unit 240. The frame processing unit 230-2 outputs the input frame to the management unit 220 in a case where the management frame or the control frame for the own station is input from the transmission/reception unit 210-2.

The data processing unit 240 outputs the MAC frame input from the frame processing unit 230-1 to the frame processing unit 230-2. In addition, the data processing unit 240 also outputs the MAC frame input from the frame processing unit 230-2 to the frame processing unit 230-1.

### (Functional Configurations of Frame Processing Units 230-1 and 230-2 of Shared AP 20)

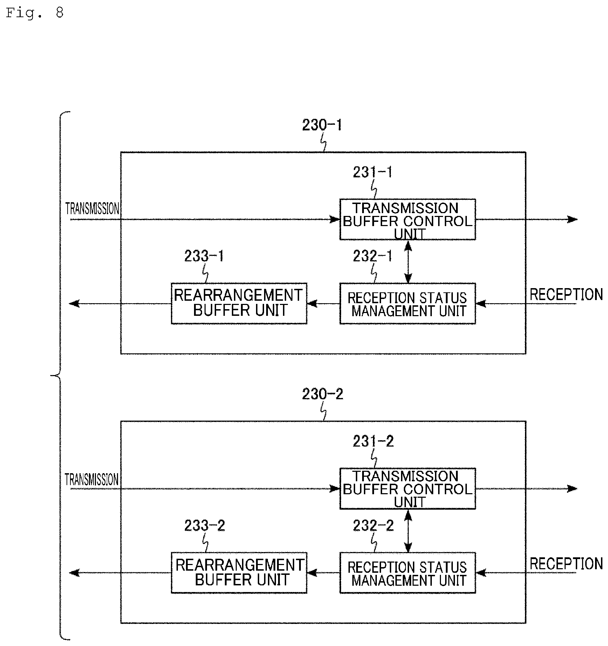

Fig. 8 is a block diagram illustrating an example of functional configurations of the frame processing units 230-1 and 230-2 included in the shared AP 20 included in the information communication system 1 according to the embodiment. As illustrated in Fig. 8, the frame processing unit 230-1 includes a transmission buffer control unit 231-1, a reception status management unit 232-1, and a rearrangement buffer unit 233-1. The frame processing unit 230-2 includes a transmission buffer control unit 231-2, a reception status management unit 232-2, and a rearrangement buffer unit 233-2. In each of the frame processing units 230-1 and 230-2, a function block to be used changes in accordance with the transmission direction of the frame.

First, the functional configurations of the frame processing units 230-1 and 230-2 used when transferring traffic from the terminal apparatus 30 to the sharing AP 10, that is, in a case of transferring uplink traffic by the shared AP 20 will be described.

The reception status management unit 232-2 determines whether the MAC frame input from the transmission/reception unit 210-2 is received correctly based on the frame check sequence in a case where the MAC frame is received from an A-STA connected to the own station, and outputs the correctly received data to the rearrangement buffer unit 233-2.

The rearrangement buffer unit 233-2 stores the MAC frames input from the reception status management unit 232-2. Then, the rearrangement buffer unit 233 outputs the stored MAC frames to the transmission buffer control unit 231-1 via the data processing unit 240 in the order of the sequence number SN.

The transmission buffer control unit 231-1 stores the MAC frame input from the data processing unit 240 in the transmission buffer, extracts the MAC frame based on window control described below, and outputs it to the transmission/reception unit 210-1. In addition, the transmission buffer control unit 231-1 may also generate a BlockAck request and output it to the

### transmission/reception unit 210-1.

In a case of receiving the BlockAck from the sharing AP 10, the reception status management unit 232-1 outputs a bitmap included in the BlockAck to the transmission buffer control unit 231-1. The transmission buffer control unit 231-1 can extract the MAC frame whose reception by the sharing AP 10 has failed from the transmission buffer and re-transmit it based on the bitmap input from the reception status management unit 232-1.

Next, the functional configurations of the frame processing units 230-1 and 230-2 used in a case of transferring traffic from the sharing AP 10 to the terminal apparatus 30, that is, when transferring downlink traffic by the shared AP 20 will be described.

In a case where the MAC frame input from the transmission/reception unit 210-1 is from the sharing AP 10 connected to the own station, the reception status management unit 232-1 determines whether the MAC frame has been correctly received based on the frame check sequence, and outputs the correctly received data to the rearrangement buffer unit 233-1.

The rearrangement buffer unit 233-1 stores the MAC frames input from the reception status management unit 232-1. Then, the rearrangement buffer unit 233-1 outputs the stored MAC frames to the transmission buffer control unit 231-2 via the data processing unit 240 in the order of the sequence number SN.

The transmission buffer control unit 231-2 stores the MAC frame input from the data processing unit 240 in the transmission buffer, extracts the MAC frame based on window control described below, and outputs it to the transmission/reception unit 210-2. In addition, the transmission buffer control unit 231-2 may also generate a BlockAck request and output it to the

### transmission/reception unit 210-2.

In a case of receiving the BlockAck from the A-STA of the terminal apparatus 30, the reception status management unit 232-2 outputs a bitmap included in the BlockAck to the transmission buffer control unit 231-2. The transmission buffer control unit 231-2 may extract the MAC frame whose reception by the A-STA of the terminal apparatus 30 has failed from the transmission buffer and re-transmit it based on the bitmap input from the reception status management unit 232-2.

### <1-3-3> Functional Configuration of Terminal Apparatus 30

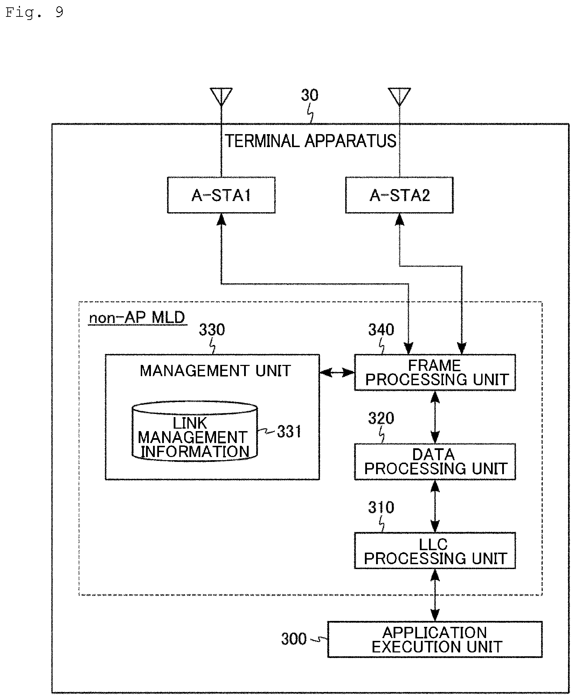

Fig. 9 is a block diagram illustrating an example of a functional configuration of the terminal apparatus 30 included in the information communication system 1 according to the embodiment. As illustrated in Fig. 9, the terminal apparatus 30 functions as a computer including, for example, an application execution unit 300, an LLC processing unit 310, a data processing unit 320, a management unit 330, a frame processing unit 340, and A-STA 1 and A-STA 2. The application execution unit 300 is a functional block that executes processing corresponding to Layer 7. The LLC processing unit 310 is a functional block that executes processing corresponding to the LLC sublayer of Layer 2 and Layer 3 to Layer 6. The data processing unit 320, the management unit 330, and the frame processing unit 340 are functional blocks that execute processing corresponding to the MAC sublayer of Layer 2. The A-STA 1 and the A-STA 2 are functional blocks that execute processing corresponding to the MAC sublayer of Layer 2 and Layer 1. For example, a set of the LLC processing unit 310, the data processing unit 320, the management unit 330, and the frame processing unit 340 corresponds to the non-AP_MLD.

The application execution unit 300 executes an application based on data input from the LLC processing unit 310. In addition, the application execution unit 300 outputs data to the LLC processing unit 310. For example, the application execution unit 300 can display information on the application on the display 35. In addition, the application execution unit 300 can work based on an operation of the input interface.

The LLC processing unit 310 adds a DSAP header, an SSAP header, or the like to the data input from the application execution unit 300 (upper layer) and generates the LLC packet. The LLC processing unit 310 outputs the generated LLC packet to the data processing unit 320. In addition, the LLC processing unit 310 extracts the data from the LLC packet input from the data processing unit 320. Then, the LLC processing unit 310 outputs the extracted data to the application execution unit 300 (upper layer).

The data processing unit 320 adds the MAC header to the LLC packet input from the LLC processing unit 310 to generate the MAC frame. Then, the data processing unit 320 outputs the generated MAC frame to the frame processing unit 340. In addition, the data processing unit 320 extracts LLC packets from the MAC frame input from the frame processing unit 340. Then, the data processing unit 320 outputs the extracted LLC packet to the LLC processing unit 310.

The management unit 330 performs establishment of wireless connection (wireless link), mapping of data types and links, setting up of the BlockAck, and the like with the sharing AP 10. The management unit 330 may, for example, obtain management information from a beacon received from the shared AP 20. In addition, the management unit 330 also manages a status of a wireless link between an A-AP of the shared AP 20 and an A-STA of the terminal apparatus 30 in the multi-AP connection. In addition, the management unit 330 includes link management information 331.

The link management information 331 stores management information regarding a status of a wireless link used in the multi-AP connection. In addition, the link management information 331 includes, for example, an identifier of the sharing AP 10 to which the own station belongs and information regarding an identifier of the shared AP 20 that establishes a wireless link with the own station. The link management information 331 may store information included in the multi-AP management information 131 and the link management information 132. The management unit 330 manages enablement and disablement of the wireless link using the link management information 331.

In a case where the MAC frame is input from the data processing unit 320, the frame processing unit 340 outputs the input frame to at least one of the A-STA 1 and the A-STA 2 in accordance with traffic allocation. In a case where the MAC frame is input from either the A-STA 1 or A-STA 2, the frame processing unit 340 outputs the input frame to the management unit 330 or the data processing unit 320 depending on the frame type. For example, in a case where a data frame is input from either the A-STA 1 or the A-STA 2, the frame processing unit 340 outputs the input frame to the data processing unit 320. In a case where the data frame is input from the data processing unit 320, the frame processing unit 340 outputs the input frame to either the A-STA 1 or the A-STA 2. In a case where a management frame or a control frame for the own station is input from either the A-STA 1 or A-STA 2, the frame processing unit 340 outputs the input frame to the management unit 330.

Each of the A-STA 1 and A-STA 2 has a function as a wireless signal processing unit configured to transmit and receive data, management information, and the like to and from the shared AP 20 by wireless communication. The A-STA adds a preamble and the like to the MAC frame input from the frame processing unit 340 to generate a wireless frame. The A-STA converts the generated wireless frame into a wireless signal. Then, the A-STA transmits (radiates) the converted wireless signal to a wirelessly connected shared AP 20 via an antenna. In addition, the A-STA converts the wireless signal received from the shared AP 20 wirelessly connected via the antenna into a wireless frame. The A-STA extracts the MAC frame from the converted wireless frame, and outputs the extracted MAC frame to the frame processing unit 340.

### (Functional Configuration of Frame Processing Unit 340 of Terminal Apparatus 30)

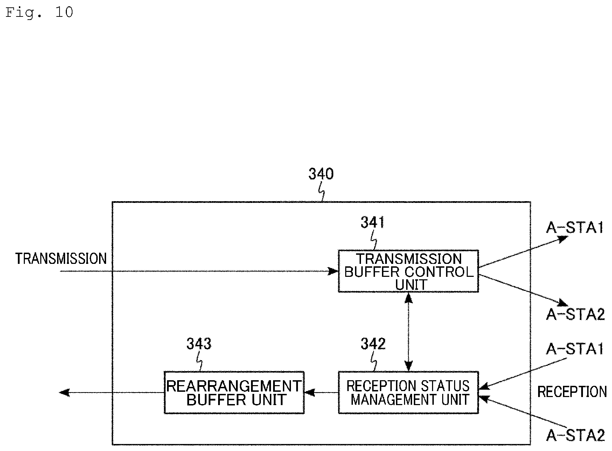

Fig. 10 is a block diagram illustrating an example of a functional configuration of the frame processing unit 340 included in the terminal apparatus 30 included in the information communication system 1 according to the embodiment. As illustrated in Fig. 10, the frame processing unit 340 includes a transmission buffer control unit 341, a reception status management unit 342, and a rearrangement buffer unit 343.

The transmission buffer control unit 341 associates the data input from the data processing unit 320 with the sequence number SN and stores the data in the transmission buffer, extracts the MAC frame based on window control described below, and outputs the MAC frame to any of the A-STAs. The window is set based on the bitmap included in the BlockAck (BA) input from the reception status management unit 342. Distribution of data by the transmission buffer control unit 341 may be transmitted to the A-STA corresponding to a traffic type (TID) based on the TID-link mapping.

In addition, the transmission buffer control unit 341 may also notify the reception status management unit 342 of the sequence number SN of the data stored in the transmission buffer. The transmission buffer control unit 341 may generate a BlockAck request (BAR) to trigger reception confirmation and output it to any of the A-STAs. The BlockAck request generated by the transmission buffer control unit 341 includes the starting sequence number SSN. The BlockAck includes the starting sequence number SSN and the bitmap (reception success/failure information about each sequence number SN starting from the starting sequence number SSN).

The reception status management unit 342 determines whether the MAC frame input from the A-STA has been correctly received based on a frame check sequence, in a case where the MAC frame input from the A-STA is from the shared AP 20 connected to the own device. The reception status management unit 342 outputs correctly received data to the rearrangement buffer unit 343. In addition, the reception status management unit 342 generates or updates the reception success/failure information for managing the result of the reception success/failure for each sequence number SN based on the information of the sequence number SN notified from the transmission buffer control unit 341. Then, the reception status management unit 342 updates the reception success/failure information based on the result of the reception success/failure. In a case of receiving the BlockAck request, the reception status management unit 342 generates a bitmap based on the reception success/failure information, and outputs it to the transmission buffer control unit 341.

The rearrangement buffer unit 343 stores the MAC frames input from the reception status management unit 342. Then, in a case where the sequence number SN of the stored MAC frames can be received in sequence without missing from the beginning, the rearrangement buffer unit 343 outputs the MAC frames received in sequence to the data processing unit 320. For example, the rearrangement buffer unit 343 may control the reception window of the MAC frames (data) to be stored based on the starting sequence number SSN included in the BlockAck from which the sharing AP 10 is the transmission source. The reception window indicates the sequence number SN and the reception status of data transferred from the sharing AP 10 in a case where the terminal apparatus 30 receives the downlink traffic. In this case, the rearrangement buffer unit 144 outputs data of the sequence number SN before the starting sequence number SSN included in the BlockAck to the upper layer, and deletes (discards) the data output to the upper layer from the rearrangement buffer unit 343.

### (Functional Configuration of A-STA of Terminal apparatus 30)

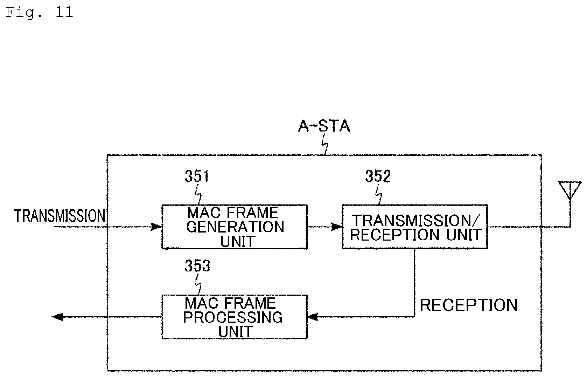

Fig. 11 is a block diagram illustrating an example of a functional configuration of an affiliated STA (A-STA) included in the terminal apparatus 30 included in the information communication system 1 according to the embodiment. As illustrated in Fig. 11, the A-STA includes a MAC frame generation unit 351, a transmission/reception unit 352, and a MAC frame processing unit 353.

The MAC frame generation unit 351 adds a MAC header or the like to the data or the like input from the transmission buffer control unit 341 to generate the MAC frame, and outputs it to the transmission/reception unit 352. The MAC header includes a sequence number SN assigned to identify data. That is, the sequence number SN is output from the transmission buffer of the non-AP_MLD along with the data.

The transmission/reception unit 352 wirelessly processes and transmits the MAC frame input from the MAC frame generation unit 351. On the other hand, the transmission/reception unit 352 extracts the MAC frame from the wireless signal received via an antenna, and outputs the MAC frame to the MAC frame processing unit 353.

The MAC frame processing unit 353 determines whether the MAC frame input from the transmission/reception unit 352 has been correctly received based on the frame check sequence. Then, the MAC frame processing unit 353 outputs the correctly received data to the frame processing unit 340 of the non-AP_MLD.

### <2> Operation

Next, the operation of the information communication system 1 according to the embodiment will be described.

### <2-1> MAC Sublayer Architecture

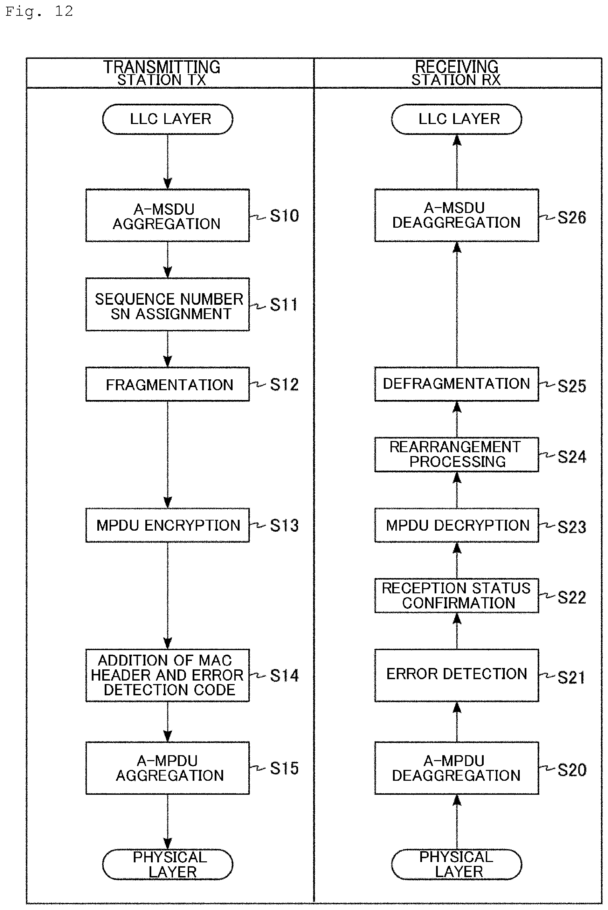

Fig. 12 is a schematic diagram illustrating an example of a MAC sublayer architecture in the information communication system 1 according to the embodiment. The left side of Fig. 12 illustrates an example of the MAC sublayer architecture on the transmission side device (transmitting station TX) among the sharing AP 10 and the terminal apparatus 30. The right side of Fig. 12 illustrates an example of the MAC sublayer architecture on the reception side device (receiving station RX) among the sharing AP 10 and the terminal apparatus 30. The transmitting station TX, for example, corresponds to the terminal apparatus 30 in a case of transmitting uplink traffic and corresponds to the sharing AP 10 in a case of transmitting downlink traffic. The receiving station RX, for example, corresponds to the sharing AP 10 in a case of transmitting uplink traffic and corresponds to the terminal apparatus 30 in a case of transmitting downlink traffic. The MAC sublayer architecture illustrated in Fig. 12 is merely an example. The MAC sublayer may be divided into an upper MAC sublayer including processing executed in common on a plurality of links and a lower MAC sublayer including processing executed on each of the plurality of links in the multi-AP connection. (Processing of Transmitting station TX)

As illustrated on the left side of Fig. 12, the transmitting station TX sequentially executes the processing procedures of S10 to S15 in the MAC layer after the LLC layer processing on the data to be transmitted is completed. The processing described below may be performed by the frame processing unit 140, 340, or the like.

First, an A-MSDU aggregation is executed (S10). The A-MSDU aggregation is the processing of combining a plurality of MAC service data units (MSDUs) input from the LLC layer to create one A-MSDU. The MSDU is a unit of data handled in the LLC layer. In a case where a plurality of MSDUs have the same receiving station address and the same TID, the transmitting station TX can create the A-MSDU using the plurality of MSDUs.

Next, one sequence number SN is assigned to one A-MSDU (S11). The transmitting station TX may manage the sequence number SN for each TID, or may manage it collectively for a plurality of TIDs. The sequence number SN is used for the receiving station RX to identify the portion of data that has been successfully received.

Then, for one A-MSDU, fragmentation is executed (S12). The fragmentation is the processing of fragmenting (dividing) an A-MSDU. Each fragmented A-MSDU corresponds to an MPDU.

Next, the MPDU encryption is executed for each of the MPDUs (S13). The MPDU encryption is the processing of encrypting MPDUs. The encrypted MPDU is configured to be decodable among the sharing AP 10, the shared AP 20, and the terminal apparatus 30 for which association has been established.

Next, a MAC header and an error detection code are added to the encrypted MPDU (S14). The MAC header includes destination and transmission source MAC addresses, an Ethertype field, and the like. The error detection codes are used for error detection of received data at the receiving station RX. For example, a cyclic redundancy check (CRC) is used as the error detection code.

Next, A-MPDU aggregation is executed (S15). The A-MPDU aggregation is the processing of generating one A-MPDU by combining a plurality of MPDUs. The generated A-MPDU is input to the physical layer.

Note that the transmitting station TX may perform buffer control using the BlockAck. For example, the transmitting station TX executes window control to delete the data whose reception has been confirmed from the transmission buffer or to transmit the next data. The window control includes processing to shift the transmission window up to the point where delivery confirmation has been made in order from the beginning.

### (Processing of Receiving Station RX)

As illustrated on the right side of Fig. 12, the receiving station RX sequentially executes the processing procedures of S20 to S26 in the MAC layer after the physical layer processing on the received wireless signal is completed. The processing described below may be performed by the frame processing units 140, 340, or the like.

First, an A-MPDU deaggregation is executed (S20). The A-MPDU deaggregation is the processing of deaggregating (dividing) A-MPDUs input from the physical layer into MPDU units.

Next, error detection is executed (S21). The error detection is the processing of detecting errors in received data using an error detection code (for example, CRC). The error detection in step S21 is executed for each MPDU.

Next, a reception status is confirmed (S22). Specifically, the success or failure of reception of data (MPDU) is determined based on the success or failure of the error detection. In a case where no error has been detected, that is, in a case where the data has been successfully received, the receiving station RX executes the next processing using the data. On the other hand, in a case where an error has been detected, the receiving station RX discards the data in which the error has been detected. In addition, the receiving station RX updates the reception success/failure information based on the data reception status based on the reception result. In addition, in response to receiving the BlockAck request, the receiving station RX transmits the BlockAck including a bitmap including at least a part of the reception success/failure information to the transmitting station TX using the wireless link that has received the BlockAck request.

Next, MPDU decryption is executed (S23). The MPDU decryption is the processing of decrypting an encrypted MPDU. Decryption of MPDU is successful in a case where it is data communicated between devices whose assignment is established in the multi-AP connection.

Next, rearrangement processing of the decrypted MPDU is executed (S24). The rearrangement processing is the processing of rearranging successfully received MPDUs in order of sequence number SN.

Next, defragmentation of the rearranged MPDU is executed (S25). The defragmentation is processing to restore the A-MSDU by combining a plurality of MPDUs.

Next, A-MSDU deaggregation is executed (S26). The A-MSDU deaggregation is processing to divide the restored A-MSDU into the MSDU unit. The divided A-MSDUs are input to the LLC layer.

### (Configuration of Transmission Buffer of Transmitting Station TX)

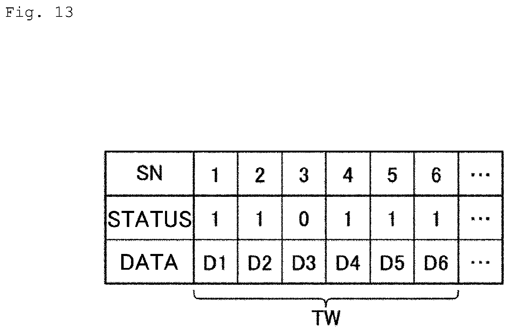

Fig. 13 is a table illustrating an example of a configuration of a transmission buffer of the transmitting station TX in the information communication system 1 according to the embodiment. As illustrated in Fig. 13, the transmission buffer stores data for each sequence number SN. In this example, the sequence numbers SN #1 to SN #6 are associated with the data D1 to data D6, respectively. In addition, the transmission buffer control unit 142 or 341 manages information indicating the reception state of each sequence number SN as the reception success/failure information associated with the transmission buffer. Fig. 13 illustrates that data D3 associated with sequence number SN3 is in an unreceived status and the data D associated with other sequence number SN is in a successfully received status.

In addition, in each of the transmission buffer control units 142 and 341, a transmission window TW is set as a unit for trying data transmission. The transmission window TW indicates the range of sequence number SN that attempts to transmit. The transmission window TW may be identified, for example, by the Window Start and the window size (the number of frames of sequence number SN to be attempted for transmission using the Window Start as a starting point). Hereinafter, the last sequence number SN included in the transmission window TW indicated by the Window Start and the window size is also referred to as "Window End".

### <2-2> Setting Up Method of Multi-AP Connections

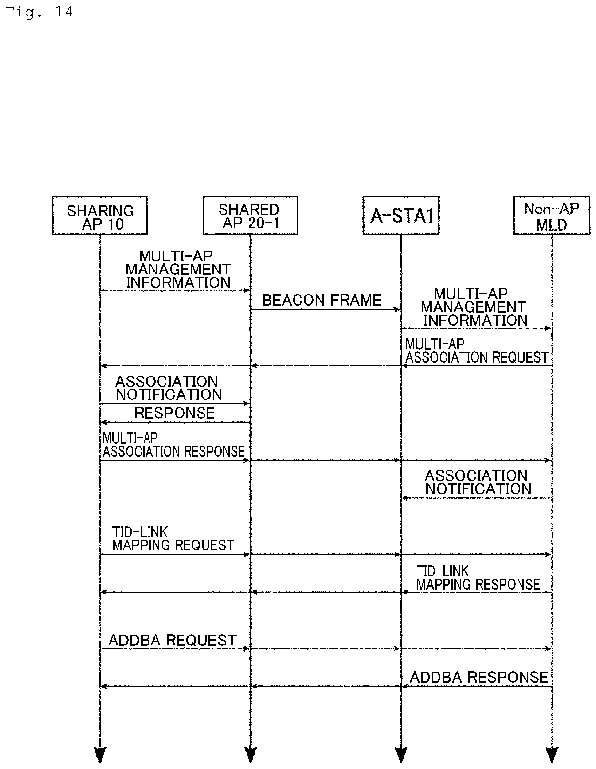

Fig. 14 is a time chart illustrating an example of a setup sequence for multi-AP connection in the information communication system 1 according to the embodiment. Hereinafter, an example of a setup sequence for multi-AP connection will be described with reference to Fig. 14. In Fig. 14, the shared AP 20-2 and A-STA 2 are omitted.

First, the sharing AP 10 notifies each shared AP of the multi-AP management information by multicast or broadcast. The multi-AP management information includes, for example, identifiers of the sharing AP 10 and the shared AP 20 used for multi-AP connection. When each shared AP 20 receives the multi-AP management information, each shared AP 20 reports the information in a beacon frame. Each A-STA receives the beacon frame and outputs it to the non-AP_MLD. The non-AP_MLD acquires multi-AP management information from the input beacon frame. Then, the non-AP_MLD generates a multi-AP association request including an identifier of a sharing AP to be a destination and an identifier of each shared AP based on the multi-AP management information, to the sharing AP 10 via either the A-STA or the shared AP 20.

The sharing AP 10 outputs an association notification (which may be a request) to the shared AP 20 under control by multicast based on the multi-AP association request. Then, the sharing AP 10 transmits a multi-AP association response to the non-AP_MLD based on a response from the shared AP 20 that is a target of the multi-AP connection. Each shared AP 20 returns a response to the association notification from the sharing AP 10 in a case where the notification includes itself. The non-AP_MLD performs association notification to each A-STA based on the response from the sharing AP 10. As a result, a wireless connection is established between the associated A-STA and the shared AP 20.

Next, the sharing AP 10 implements a TID-link mapping. Specifically, the sharing AP 10 transmits a TID-link mapping request to the non-AP _MLD. Then, the non-AP_MLD returns a response to the TID-link mapping request (TID-link mapping response) to the sharing AP 10. This allows the sharing AP 10 to associate each TID with the non-AP_MLD (corresponding to the shared AP 20 in this example). In default settings, for example, each TID is associated with all links. In a case where it is desired to associate only a specific link with a specific TID, the sharing AP 10 associates the target link with the TID by TID-link mapping.

Next, the sharing AP 10 implements the BlockAck setup. Specifically, the sharing AP 10 transmits an ADDBA request to the non-AP_MLD before exchanging the BlockAck. The ADDED request includes a target TID, a buffer size, an initial value of the starting sequence number SSN, and the like. Then, the non-AP_MLD returns a response (ADDBA response) to the ADDBA request to the sharing AP 10. Thus, the sharing AP 10 can set up the BlockAck implementation parameters during data transfer.

As described above, in the information communication system 1, the management unit 130 cooperates with the plurality of shared APs 20 belonging to the sharing AP 10 and the non-AP MLD of the terminal apparatus 30, assignment (mapping) of traffic to be transmitted and received between the sharing AP 10 and the terminal apparatus 30 may be executed. Thus, the management unit 130 may instruct the frame processing unit 140 of a transmission destination of traffic based on traffic assignment. Then, the frame processing unit 140 can cause the transmission/reception unit 150 to transmit traffic to the shared AP 20 based on an instruction from the management unit 130. For example, traffic assigned to a link associated with the shared AP 20-1 is transmitted from the transmission/reception unit 150 of the sharing AP 10 to the shared AP 20-1 based on an instruction from the management unit 130.

### <2-3> Transfer Method of Data

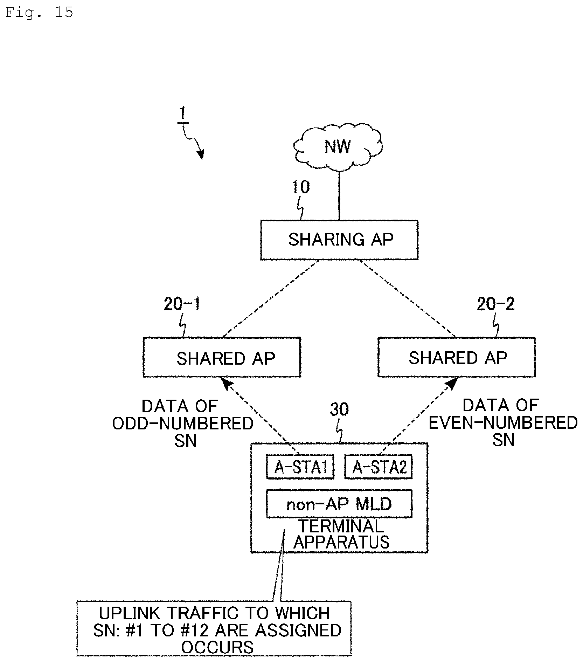

Fig. 15 is a block diagram illustrating an example of a data transfer method in the information communication system according to the embodiment. Fig. 15 illustrates a case where uplink traffic is transferred from the terminal apparatus 30 to the sharing AP 10 using a multi-AP connection. In this example, the A-STA 1 is assigned to the transfer of data with an odd sequence number SN. The A-STA 2 is assigned to the transfer of data of even sequence number SN. That is, the case where the data of the same TID is mapped to the A-STA 1 and the A-STA 2 and the transmission buffer control unit 341 distributes the data to the A-STA 1 and the A-STA 2 alternately is illustrated. Further, in the specific example of the data transfer method described below, the case where uplink traffic to which sequence numbers SN: #1 to #12 are assigned occurs will be described.

The BlockAck in the information communication system 1 according to the first embodiment is executed in two stages: (1) end-to-end (between the sharing AP 10 and the non-AP_MLD), and (2) per link. (1) The non-AP_MLD transmits a BlockAck request to the sharing AP 10 to acquire the reception status for all sequence numbers SN. (2) Each shared AP 20 also transmits the BlockAck request to the sharing AP 10 to acquire the reception status for all sequence numbers SN. (1), (2) When the BlockAck request is received, the sharing AP 10 returns the reception status for all sequence numbers SN by the BlockAck.

Then, in the information communication system 1 according to the first embodiment, the non-AP_MLD shifts the window based on the acquired reception status. Specifically, the non-AP_MLD shifts by the amount of sequence numbers SN for which reception has been confirmed in order from the beginning. Then, the non-AP_MLD deletes (discards) data that has fallen outside the window due to the window shift from the transmission buffer, and sets data that has newly entered the window range due to the window shift as the next transmission target.

Furthermore, in the information communication system 1 according to the first embodiment, each device performs window control of the transmission buffer and the reception success/failure information based on the starting sequence number (SSN) included in the BlockAck request on the transmission side so that each device performs self-sustained distributed control so that the transmission buffer and the reception success/failure information match each other in the entire system. For example, each shared AP 20, regardless of whether it has transmitted or buffered data, controls so that the window stops just before any sequence number SN that has not been confirmed as delivered to the sharing AP 10 when viewed across all sequence numbers. Specifically, the shared AP 20 shifts the window to just before the starting sequence number SSN stored in the BlockAck received from the sharing AP 10.

### <2-3-1> Window Control Method of Sharing AP 10

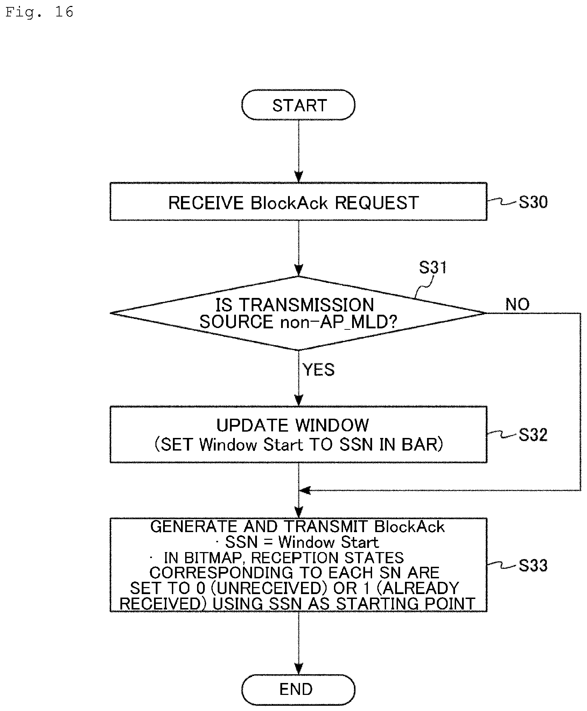

Fig. 16 is a flowchart illustrating an example of a window control method of the sharing AP 10 included in the information communication system 1 according to the embodiment. Hereinafter, an example of a window control method of the sharing AP 10 will be described with reference to Fig. 16.

In the sharing AP 10, in a case where the uplink data transmission by the terminal apparatus 30 is being implemented, a series of processing procedures in Fig. 16 is appropriately executed (START).

First, the sharing AP 10 receives a BlockAck request (BAR) (S30). The transmission source of the BlockAck received by the sharing AP 10 may be the non-AP_MLD or the shared AP 20.

Then, the sharing AP 10 confirms whether the transmission source of the BlockAck request is a non-AP_MLD (S31). In a case where it is confirmed that the transmission source is non-AP_MLD (S31: YES), the sharing AP 10 proceeds to the processing of S32. In a case where it is confirmed that the transmission source is not the non-AP_MLD (S31: NO), the sharing AP 10 proceeds to the processing of S33. In this way, processing to be executed next by the sharing AP 10 is branched depending on the transmission source of the BlockAck.

In the processing of S32, the sharing AP 10 updates the window. Specifically, the Window Start in the rearrangement buffer unit 144 is set to the starting sequence number SSN in the BlockAck request (Window Start=SSN). That is, in the processing of S32, in a case where the transmission source of the BlockAck request is the non-AP_MLD, the sharing AP 10 shifts the reception confirmation window in the sharing AP 10, since the data up to the starting sequence number SSN is regarded as having also been confirmed as received by the transmission side device (transmitting station). When the processing in S32 is completed, the sharing AP 10 proceeds to the processing in S33.

In the processing of S33, the sharing AP 10 executes generation and transmission of the BlockAck. Specifically, first, the sharing AP 10 generates the BlockAck including the SSN and the bitmap. The sharing AP 10 sets the SSN to be stored in the BlockAck to the same value as the Window Start in the rearrangement buffer unit 144 (SSN=Window Start). In addition, the sharing AP 10 sets a reception state corresponding to each sequence number SN to 0 (unreceived) or 1 (already received) with the starting sequence number SSN as a starting point in a bitmap stored in the BlockAck based on the reception success/failure information of the reception status management unit 143. Then, the sharing AP 10 transmits the generated BlockAck to the device (sharing AP 10 or shared AP 20) that is the transmission source of the BlockAck request. When the processing of step S33 is completed, the sharing AP 10 ends the series of processing procedures in Fig. 16 (END).

### <2-3-2> Window Control Method of Shared AP 20

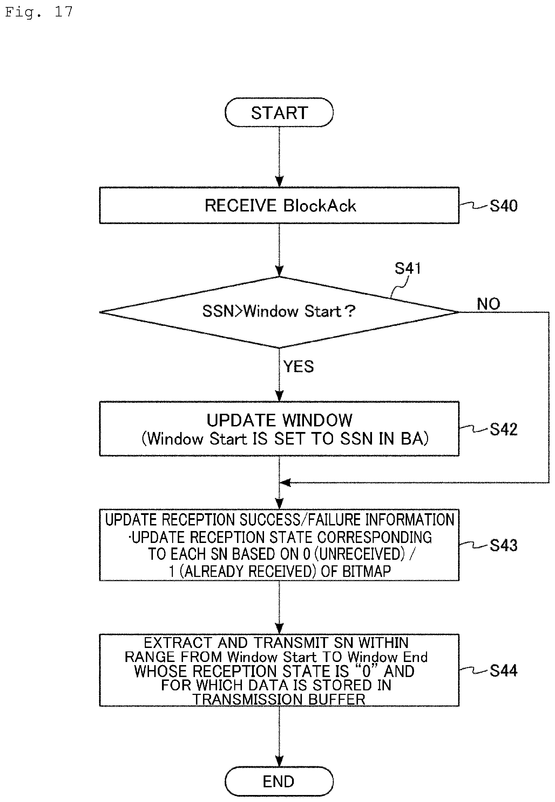

Fig. 17 is a flowchart illustrating an example of a window control method of the shared AP 20 included in the information communication system 1 according to the embodiment. Hereinafter, an example of a window control method of the shared AP 20 will be described with reference to Fig. 17.

In the shared AP 20, in a case where the uplink data transmission by the terminal apparatus 30 is being implemented, a series of processing procedures in Fig. 17 is appropriately executed (START).

First, the shared AP 20 receives the BlockAck (S30). Then, the shared AP 20 acquires the starting sequence number SSN and the bitmap from the received BlockAck. Then, the shared AP 20 updates the reception success/failure information of the reception status management unit 232 based on the content of the received BlockAck.

Specifically, the shared AP 20 confirms whether the starting sequence number SSN indicated by the BlockAck is greater than the Window Start set in its transmission buffer control unit 231 (S41: SSN>Window Start?). In a case where SSN>Window Start is satisfied (S41: YES), the shared AP 20 proceeds to the processing of S42. In a case where SSN>Window Start is not satisfied (S41: NO), the shared AP 20 proceeds to the processing of S42.

In the processing of S42, the shared AP 20 updates the window. Specifically, the Window Start in the transmission buffer is set to the starting sequence number SSN in the BlockAck (Window Start=SSN). That is, in the processing of S42, the shared AP 20 shifts a window for confirmation of reception in the shared AP 20, because data up to the starting sequence number SSN have confirmed the completion of reception in the transmission side device (transmitting station). When the processing in S42 is completed, the shared AP 20 proceeds to the processing in S42.

In the processing of S43, the shared AP 20 updates the reception success/failure information. Specifically, the reception state corresponding to each sequence number SN is updated based on 0 (unreceived) /1 (already received) of the bitmap included in the BlockAck. More specifically, the shared AP 20 sets the reception state to "1" for sequence numbers SN for which "1" is set on the bitmap, using the Window Start of the transmission buffer as the starting point. Note that the shared AP 20 maintains the reception state at "0" for sequence numbers SN for which "0" is set on the bitmap. When the processing in S43 is completed, the shared AP 20 proceeds to the processing in S44.

In the processing of S44, the shared AP 20 extracts, from among the sequence numbers SN included in the Window Start to Window End of the transmission buffer, data in which the reception state is "0" and which is stored in the transmission buffer, and transmits them to the sharing AP 10. When the processing of S44 is completed, the shared AP 20 ends the series of processing procedures in Fig. 17 (END).

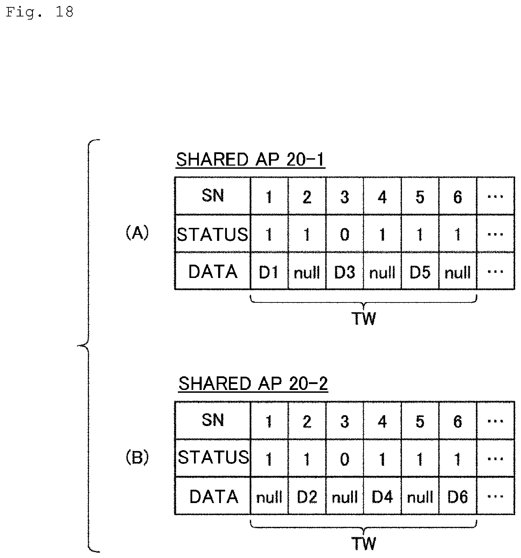

Fig. 18 is a schematic diagram illustrating a specific example of a management method of a transmission buffer of the shared AP 20 included in the information communication system 1 according to the embodiment. (A) of Fig. 18 illustrates data stored in the transmission buffer of the shared AP 20-1. (B) of Fig. 18 illustrates the data stored in the transmission buffer of the shared AP 20-2. In this example, for each of the shared APs 20-1 and 20-2, Window Start=1 is satisfied and the window size=6 is set.

As illustrated in Fig. 18, the transmission buffer of the shared AP 20-1 stores data D1, D3, and D5 corresponding to odd sequence numbers SN #1, SN #3, and SN#5, respectively, and holds no data corresponding to even sequence numbers SN #2, SN #4, and SN #6 (null). On the other hand, the transmission buffer of the shared AP 20-2 stores data D2, D4, and D6 corresponding to even sequence numbers SN #2, #4, and #6, respectively, and does not hold data corresponding to odd sequence numbers SN #1, #3, and #5 (null).

In each of the shared AP 20-1 and AP 20-2, the transmission window TW is set based on Window Start = 1 and the window size=6. Thus, in the information communication system 1 according to the embodiment, the transmission buffer of each shared AP 20 is controlled such that the settings of the transmission window TW of each shared AP 20-1 and AP 20-2 used in the multi-AP connection are synchronized.

### <2-3-3> Window Control Method of Terminal Apparatus 30

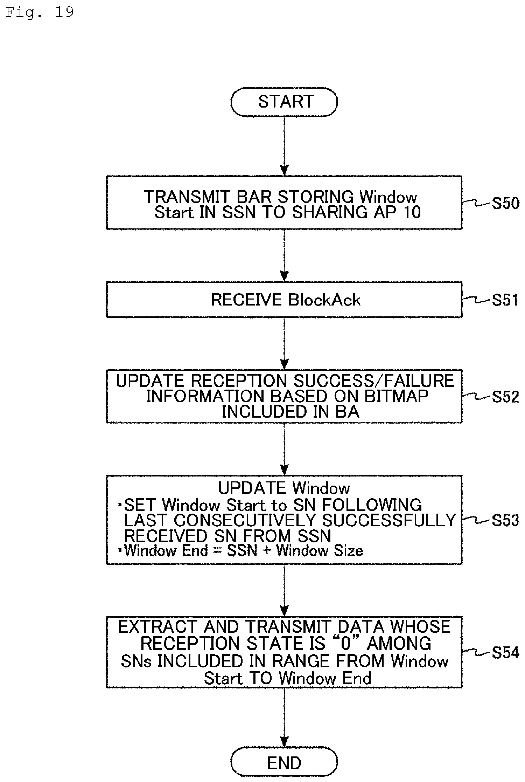

Fig. 19 is a flowchart illustrating an example of a window control method of the terminal apparatus 30 included in the information communication system 1 according to the embodiment. Next, an example of a window control method of the terminal apparatus 30 will be described with reference to Fig. 19.

In a case where the terminal apparatus 30 implements transmission of uplink data, it appropriately executes the series of processing procedures illustrated in Fig. 19 (START).

First, the terminal apparatus 30 transmits the BlockAck request in which the Window Start is stored in the starting sequence number SSN to the sharing AP 10 which is the data reception destination (S50).

Thereafter, the terminal apparatus 30 receives the BlockAck in response to the transmitted BlockAck request (S51). The BlockAck includes a bitmap starting from the Window Start at the reception destination as the starting sequence number SSN (the reception state for each sequence number SN is expressed by 0/1).

Then, the terminal apparatus 30 updates the reception success/failure information based on the bitmap included in the BlockAck (S52). Specifically, the terminal apparatus 30 sets the reception state to "1" for the sequence numbers SN for which "1" is set in the bitmap, starting from the Window Start as the starting point. For the sequence numbers SN for which "0" is set in the bitmap, the terminal apparatus 30 maintains the reception state at "0".

Then, the terminal apparatus 30 updates the window (S53). Specifically, the terminal apparatus 30 sets the Window Start of the transmission buffer to the sequence number SN next to the last sequence number SN that was successfully received consecutively from the starting sequence number SSN. This is because, starting from the starting sequence number (SSN) as the starting point, the data for which "1" is set in the bitmap has been confirmed as received. In addition, the terminal apparatus 30 sets the window End of the transmission buffer to a value obtained by adding the window size to the starting sequence number SSN (Window End=SSN+Window Size). Thus, the terminal apparatus 30 can shift the transmission window TW by the amount of consecutive "1"s set, starting from the starting sequence number SSN as the starting point.

Next, the terminal apparatus 30 extracts the data whose reception state is "0" among from the sequence numbers SN included in the range from Window Start to Window End of the transmission buffer, and transmits it toward the sharing AP 10 (S54). That is, as a result of shifting the window through the processing in S53, the terminal apparatus 30 becomes able to identify new data to be transmitted, and transmits it. In processing in S54, the terminal apparatus 30 may also retransmit data that could not be confirmed as received (data for which the reception state is "0" on the bitmap and that is stored in the transmission buffer).

### <2-4> Specific Examples of Data Transfer Sequences

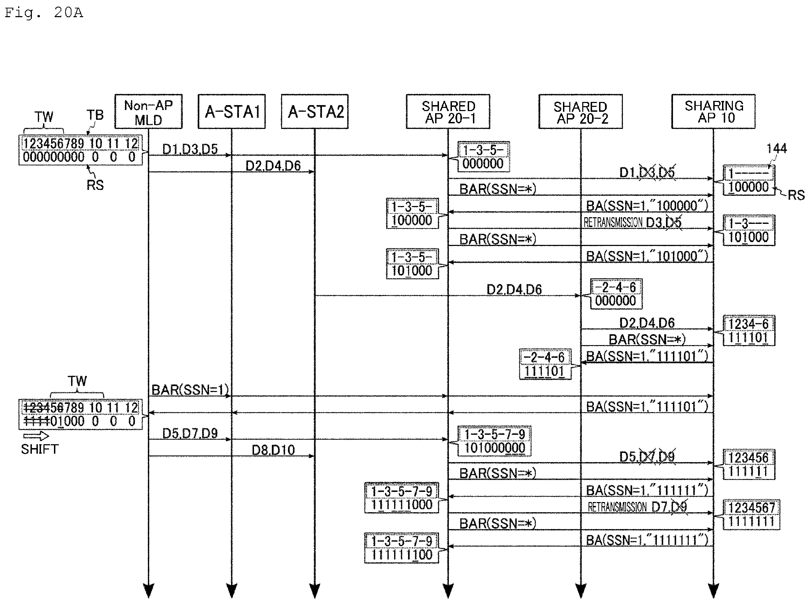

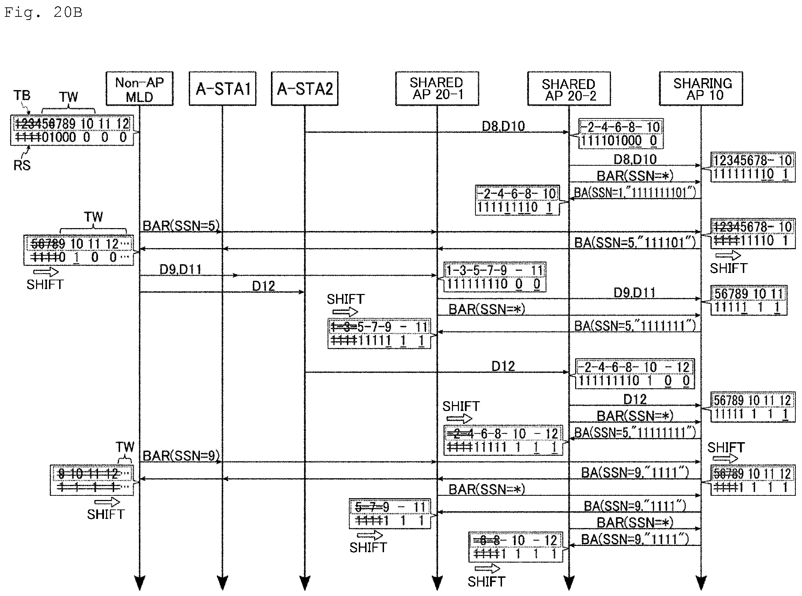

Figs. 20A and 20B are a time chart illustrating a specific example of a data transfer sequence of the information communication system 1 according to the embodiment. Fig. 20B illustrates the processing following the time chart illustrated in Fig. 20A. In Figs. 20A and 20B, it is assumed that the transmission buffers TB of the non-AP_MLD and the shared AP 20-1 and AP 20-2, respectively, and the rearrangement buffer unit 144 of the sharing AP 10 store the data of the sequence number SN of the numbers within the frame of the broken line. In addition, the numbers of the reception status RS described under the bitmaps of the transmission buffer TB and the rearrangement buffer unit 144 indicate the reception status of the adjacent sequence number SN. A specific example of a data transfer sequence in the case of transferring uplink traffic will be described below with reference to Figs. 20A and 20B. In the following description, the timing at which the BlockAck request is transmitted may be arbitrary, but the shared AP 20-1, the shared AP 20-2, the non-AP_MLD will now be described.

At the start of the processing illustrated in Fig. 20A, the transmission buffer of the terminal apparatus 30 (non-AP_MLD) stores the data of sequence numbers SN #1 to #12. That is, the number of data pieces stored in the transmission buffer of the non-AP_MLD is 12, and the sequence numbers #1 to #12 are assigned to each of them. The uplink traffic is then transmitted from the non-AP_MLD to the sharing AP 10. Specifically, the non-AP_MLD outputs the data D1, D3, and D5 of the odd sequence numbers SN #1, SN#3, and #5 to the A-STA 1, the data D2, D4 and D6 of the even sequence numbers SN #2, #4 and #6 are output to the A-STA 2. Then, the A-STA 1 transmits the data D1, D3, and D5 to the shared AP 20-1, and the A-STA 2 transmits the data D2, D4, and D6 to the shared AP 20-2.

The shared AP 20-1 stores the received data D1, D3, and D5 in the transmission buffer TB to update its own reception success/failure information, and transmits the data D1, D3, and D5 to the sharing AP 10. Then, the sharing AP 10 updates own reception success/failure information (rearrangement buffer unit 144) based on successful reception of the data D1 and failed reception of the data D3 and D5. Thereafter, the shared AP 20-1 confirms the reception status after data transmission by transmitting the BlockAck request to the sharing AP 10. In this example, the sharing AP 10 transmits the BlockAck (SSN=1, "100000") to the shared AP 20-1 in response to the BAR. This "100000" corresponds to a bitmap indicating the reception state, with the associated starting sequence number SSN as the starting point.

The shared AP 20-1 updates its own reception success/failure information based on receiving the BlockAck (SSN=1, "100000"), and retransmits the data D3 and D5 to the sharing AP 10. The data to be retransmitted is the data of sequence number SN corresponding to "0" in the received bitmap and stored in the transmission buffer. Note that in this example, the retransmission is performed only once. Then, the sharing AP 10 updates own reception success/failure information based on successful reception of the data D3 and failed reception of the data D5. Thereafter, the shared AP 20-1 confirms the reception status after data transmission by transmitting the BlockAck request to the sharing AP 10. In this example, the sharing AP 10 transmits the BlockAck (SSN=1, "101000") to the shared AP 20-1 in response to the BAR. The shared AP 20-1 updates its own reception success/failure information based on receiving the BlockAck (SSN=1, "101000").

The shared AP 20-2 stores the received data D2, D4, and D6 in the transmission buffer TB to update its own reception success/failure information, and transmits the data D2, D4, and D6 to the sharing AP 10. Then, the sharing AP 10 updates own reception success/failure information based on successful reception of the data D2, D4, and D6. Thereafter, the shared AP 20-2 transmits the BlockAck request to the sharing AP 10, and the sharing AP 10 transmits the BlockAck (SSN=1, "111101") to the shared AP 20-2 in response to the BAR. The shared AP 20-2 updates its own reception success/failure information based on receiving the BlockAck (SSN=1, "111101").

In addition, the non-AP_MLD confirms the reception status by the BlockAck request after transmitting the data D1 to D6. Specifically, the non-AP_MLD transmits the BlockAck request (SSN=1) toward the sharing AP 10. In this example, the sharing AP 10 transmits the BlockAck (SSN=1, "111101") to the non-AP_MLD in response to the BAR. Thus, the transmission buffer control unit 341 of the non-AP_MLD recognizes that the data of sequence numbers SN #1 to #4 can be confirmed to be received based on the starting sequence number SSN=1 and the bitmap, and shifts the Window Start to the next sequence number SN #5 which is successfully received in the serial number. In this example, since the window size is set to 6 frames, the sequence number of the Window End is set to SN #10. Then, the transmission buffer control unit 341 discards the data whose reception has been confirmed from the transmission buffer. The starting sequence number SSN in the subsequent BlockAck request is set to the starting sequence number SSN=5 for the window after shifting.

Next, the non-AP_MLD outputs the data D5, D7, and D9 of the odd sequence numbers SN #5, #7, and #9 to the A-STA 1, and outputs the data D2, D4, and D6 of the even sequence numbers SN #8 and #10 to the A-STA 2 based on the transmission window TW (SSN=5, Window Size=6) and the reception success/failure information. Then, the A-STA 1 transmits the data D5, D7, and D9 to the shared AP 20-1, and the A-STA 2 transmits the data D8 and D10 to the shared AP 20-2.

The shared AP 20-1 stores the received data D5, D7, and D9 in the transmission buffer and updates its own reception success/failure information. At this time, the transmission of data already transmitted from the non-AP_MLD to the shared AP 20 may be omitted. Then, the data D5, D7, and D9 are transmitted to the sharing AP 10. Then, the sharing AP 10 updates its own reception success/failure information based on successful reception of the data D5 and failed reception of the data D7 and D9. Thereafter, the shared AP 20-1 transmits the BlockAck request to the sharing AP 10, and the sharing AP 10 transmits the BlockAck (SSN=1, "111111") to the shared AP 20-1 in response to the BAR. The shared AP 20-1 updates its own reception success/failure information based on receiving the BlockAck (SSN= 1, "111111"), and retransmits the data D7 and D9 to the sharing AP 10. Then, the sharing AP 10 updates its own reception success/failure information based on successful reception of the data D7 and failed reception of the data D9. Thereafter, the shared AP 20-1 transmits the BlockAck request to the sharing AP 10. Then, the sharing AP 10 transmits the BlockAck (SSN=1, "1111111") to the shared AP 20-1 in response to the BAR. The shared AP 20-1 updates its own reception success/failure information based on receiving the BlockAck (SSN= 1, "1111111").

The shared AP 20-2 stores the received data D8 and D10 in the transmission buffer and updates its own reception success/failure information. Then, the data D8 and D10 are transmitted to the sharing AP 10. Then, the sharing AP 10 updates its own reception success/failure information based on successful reception of the data D8 and D10. Thereafter, the shared AP 20-2 transmits the BlockAck request to the sharing AP 10, and the sharing AP 10 transmits the BlockAck (SSN= 1, "1111111101") to the shared AP 20-1 in response to the BAR. The shared AP 20-1 updates its own reception success/failure information based on receiving the BlockAck (SSN= 1, "1111111101").

In addition, the non-AP_MLD confirms the reception status by the BlockAck request after transmitting the data D5 and D7 to D10. Specifically, the non-AP_MLD transmits the BlockAck request (SSN=5) toward the sharing AP 10. The sharing AP 10 shifts the starting sequence number of the reception window of the rearrangement buffer unit 144 to SSN=5 based on receiving the BlockAck request of SSN=5. Then, the transmission buffer control unit 142 discards data of SSN smaller than the updated starting sequence number SSN from the rearrangement buffer unit 144. In addition, the sharing AP 10 transmits the BlockAck (SSN=5, "111101") to the non-AP_MLD in response to the BAR. Thus, the transmission buffer control unit 341 of the non-AP_MLD recognizes that the data of sequence numbers SN #5 to #8 can be confirmed to be received based on the starting sequence number SSN=5 and the bitmap, and shifts the Window Start to the next sequence number SN #9 which is successfully received in the serial number. In this example, since the window size is set to 6 frames, the sequence number of the Window End is set to SN #14 (not shown). Then, the transmission buffer control unit 341 discards the data whose reception has been confirmed from the transmission buffer. The starting sequence number SSN in the subsequent BlockAck request is set to the starting sequence number SSN=9 for the window after shifting.

Next, the non-AP_MLD outputs the data D9 and D11 of the odd sequence numbers SN #9 and #11 to the A-STA 1, and outputs the data D12 of the even sequence number SN #12 to the A-STA 2 based on the transmission window TW (SSN=9, Window Size= 6) and the reception success/failure information. Then, the A-STA 1 transmits the data D9 and D11 to the shared AP 20-1, and the A-STA 2 transmits the data D12 to the shared AP 20-2.

The shared AP 20-1 stores the received data D9 and D11 in the transmission buffer and updates its own reception success/failure information. Then, the data D9 and D11 are transmitted to the sharing AP 10. Then, the sharing AP 10 updates its own reception success/failure information based on successful reception of the data D9 and D11. Thereafter, the shared AP 20-1 transmits the BlockAck request to the sharing AP 10, and the sharing AP 10 transmits the BlockAck (SSN=5, "1111111") to the shared AP 20-1 in response to the BAR. The shared AP 20-1 shifts the transmission window TW based on receiving the BlockAck (SSN=5, "1111111"), updates its own reception success/failure information, and discards data up to the sequence number SN=5 whose reception is confirmed from the transmission buffer.

The shared AP 20-2 stores the received data D12 in the transmission buffer and updates its own reception success/failure information. Then, the data D12 is transmitted to the sharing AP 10. Then, the sharing AP 10 updates own reception success/failure information based on successful reception of the data D12. Thereafter, the shared AP 20-2 transmits the BlockAck request to the sharing AP 10, and the sharing AP 10 transmits the BlockAck (SSN=5, "11111111") to the shared AP 20-2 in response to the BAR. The shared AP 20-2 shifts the transmission window TW based on receiving the BlockAck (SSN=5, "11111111"), updates its own reception success/failure information, and discards data up to sequence number SN=5 whose reception was confirmed from the transmission buffer.

The non-AP_MLD confirms the reception status by a BlockAck request after transmitting the data D9, D11, and D12. Specifically, the non-AP_MLD transmits a BlockAck request (SSN=9) toward the sharing AP 10. The sharing AP 10 shifts the starting sequence number of the reception window of the rearrangement buffer unit 144 to SSN=9 based on receiving the BlockAck request of SSN=9. Then, the transmission buffer control unit 142 discards data of SSN smaller than the updated starting sequence number SSN from the rearrangement buffer unit 144. In addition, the sharing AP 10 transmits the BlockAck (SSN=9, "1111") to the non-AP_MLD in response to the BAR. Thus, the transmission buffer control unit 341 of the non-AP _MLD ascertains that the data of sequence numbers SN #9 to #12 can be confirmed to be received based on the starting sequence number SSN=9 and the bitmap, and shifts the Window Start to the next sequence number SN that is successfully received in the serial number. Then, the transmission buffer control unit 341 discards the data whose reception has been confirmed from the transmission buffer.

Thereafter, when the shared AP 20-1 transmits the BlockAck request to the sharing AP 10, the sharing AP 10 transmits the BlockAck (SSN= 9, "1111") to the shared AP 20-1 in response to the BAR. The shared AP 20-1 shifts the transmission window TW based on receiving the BlockAck (SSN=9, "1111"), updates its own reception success/failure information, and discards data up to sequence number SN=9 whose reception was confirmed from the transmission buffer.

Similarly, the shared AP 20-2 transmits the BlockAck request to the sharing AP 10, and the sharing AP 10 transmits the BlockAck (SSN=9, "1111") to the shared AP 20-2 in response to the BAR. The shared AP 20-2 shifts the transmission window TW based on receiving the BlockAck (SSN=9, "1111"), updates its own reception success/failure information, and discards data up to the sequence number SN=9 whose reception was confirmed from the transmission buffer.

As described above, in the data transfer sequence in the information communication system 1 according to the embodiment, the settings of the transmission window TW in each transmission buffer are synchronized. In the above description, an example is given in which uplink traffic is transferred in the multi-AP connection, that is, the non-AP_MLD serves as the transmitting station TX and the sharing AP 10 serves as the receiving station RX; however, the present invention is not limited thereto. Similar operations may also be implemented by replacing the above-described operation of the sharing AP 10 with the operation of the non-AP _MLD, even in a case where the non-AP _MLD is the receiving station RX and the sharing AP is the transmitting station TX, that is in a case of transferring the downlink traffic in the multi-AP connection.

### <3> Effects of Embodiment

Next, the effects of the information communication system 1 according to the embodiment will be described.

In the information communication system 1 according to the embodiment, each shared AP 20 stores data transmitted by itself in the transmission buffer and manages their reception states. The reception success/failure information is updated based on the reception states for all sequence numbers SN included in the BlockAck from the sharing AP 10 (in the case of uplink traffic) or from the non-AP _MLD (in the case of downlink traffic) (that is, not limited to the data transmitted by the own device), and the transmission window TW is controlled accordingly. Then, for the sequence number SN whose reception has been confirmed in order from the beginning, the transmission window TW is shifted to discard the buffer data, and data corresponding to the sequence number SN newly entered in the transmission window TW is transmitted.

Thus, in the information communication system 1 according to the embodiment, regardless of traffic transmitted/buffered by each device (sharing AP 10, shared AP 20, and terminal apparatus 30), the transmission buffer is controlled by viewing the reception status of the entire sequence number SN. As a result, the transmission buffer control of the shared AP 20 becomes clear in a case where the multi-AP connection is adopted, and the window control of the transmission buffer in the end-to-end/entire system including each shared AP 20 is synchronized.

As described above, the information communication system 1 according to the embodiment can provide the shared AP 20, the transmitting station TX, and the receiving station RX, which can properly control the window of the transmission buffer in the entire information communication system 1 when the multi-AP function is used. Further, the information communication system 1 according to the embodiment can reliably transmit data end-to-end without the risk of malfunction due to synchronization of window control. Furthermore, the information communication system 1 according to the embodiment can perform retransmission control at the shared AP 20 level, thereby improving data transmission efficiency.

### <4> Others

Examples of the conversion processing from a wireless frame to a wireless signal described in the embodiment include convolutional encoding processing, interleaving processing, sub-carrier modulation processing, inverse fast Fourier transform processing, OFDM modulation processing, and frequency conversion processing. Examples of the conversion processing from the wireless signal to the wireless frame described in the embodiment include frequency conversion processing, OFDM demodulation processing, fast Fourier transform processing, subcarrier demodulation processing, deinterleaving processing, and Viterbi decoding processing. In the present specification, the BlockAck may be referred to as the reception confirmation frame. The BlockAck request may be referred to as a reception confirmation request frame.

In the embodiment, each of the CPU 11 of the sharing AP 10, the CPU 21 of the shared AP 20, and the CPU 31 of the terminal apparatus 30 may be other circuits. For example, each of the sharing AP 10, the shared AP 20, and the terminal apparatus 30 may be equipped with a micro processing unit (MPU) or the like instead of a CPU. Each of processing described in the embodiment may be implemented by dedicated hardware. Each of processing of the sharing AP 10, the shared AP 20, and the terminal apparatus 30 may be a mixture of processing procedures executed by software and processing procedures executed by hardware, or may be only one of them. The CPU may be called a "processor". The wireless communication module may be called a "communication circuit."

In the embodiment, the flowchart used for describing of the operation is merely an example. The order of the processing of each operation described in the embodiments may be replaced within a range in which each operation can be fulfilled, or other processing may be added. For example, the link setup method and data transfer method described in the embodiment are merely examples. A wireless communication standard different from the IEEE 802.11 standard may be used as the wireless communication standard.

The present invention is not limited to the above embodiments, and can be modified in various ways without departing from the scope thereof at the implementation stage. In addition, each of the embodiments may be combined appropriately, and in such a case, advantageous effects of the combinations can be obtained. Further, the foregoing embodiments include various inventions, and various inventions can be extracted by selecting combinations of the plurality of constituent elements disclosed herein. For example, even if several constituent elements are removed from all the constituent elements described in the embodiments, configurations in which those constituent elements are removed can be extracted as an invention as long as the problem can be solved and the advantageous effects can be obtained.

### [Reference Signs List]

1 Information communication system
10 Sharing access point
20 Shared access point
30 Terminal apparatus
11, 21, 31 CPU
12, 22, 32 ROM
13, 23, 33 RAM
14, 24, 34 Wireless communication module
15 Wired communication module
35 Display
36 Storage
110, 310 LLC processing unit
120, 240, 320 Data processing unit
130, 220, 330 Management unit
131 Multi-AP management information
132, 221, 331 Link management information
140, 230, 340 Frame processing unit
141, 351 MAC frame generation unit
142, 231, 341 Transmission buffer control unit
143, 232, 342 Reception status management unit
144, 233, 343 Rearrangement buffer unit
150, 210-1, 210-2, 352 Transmission/reception unit
222 Beacon generation unit
300 Application execution unit
353 MAC frame processing unit
SN Sequence number
SSN Starting sequence number
TW Transmission window
TB Transmission buffer
RS Reception status

## Claims

1. An access point in an information communication system including a transmitting station, the access point with which a first wireless link with the transmitting station is established, other access point with which a second wireless link with the transmitting station is established, and a receiving station with which a third wireless link with the access point and a fourth wireless link with the other access point are established, in which traffic is distributed between the access point and the other access point, and data is transferred from the transmitting station to the receiving station, the access point comprising:
a reception status management unit that is configured to update reception success/failure information indicating a reception status of data stored in a transmission buffer based on a starting sequence number and a bitmap included in a reception confirmation frame received via the first wireless link or the third wireless link; and
a transmission buffer control unit that is configured to store data received via the first wireless link or the third wireless link in the transmission buffer, determine data to be transmitted via the first wireless link or the second wireless link from among the data stored in the transmission buffer based on a transmission window, and shift the transmission window based on a starting sequence number included in the reception confirmation frame.

2. The access point according to claim 1, wherein the transmission buffer control unit is configured to set a sequence number indicating a start point of the transmission window to the starting sequence number included in the reception confirmation frame.

3. The access point according to claim 1, wherein the transmission buffer control unit is configured to extract, from among sequence numbers included in the transmission window, data for which a reception state is unreceived and which is stored in the transmission buffer, and to transmit the data via the first wireless link or the second wireless link.

4. A transmitting station in an information communication system including the transmitting station, an access point with which a first wireless link with the transmitting station is established, other access point with which a second wireless link with the transmitting station is established, and a receiving station with which a third wireless link with the access point and a fourth wireless link with the other access point are established, in which traffic is distributed between the access point and the other access point, and data is transferred from the transmitting station to the receiving station, the transmitting station comprising:
a reception status management unit that is configured to update reception success/failure information indicating a reception status of data stored in a transmission buffer based on a starting sequence number and a bitmap included in a reception confirmation frame received via the first wireless link or the second wireless link; and
a transmission buffer control unit that is configured to store data received from outside in the transmission buffer, determine data to be transmitted via the first wireless link or the second wireless link from among the data stored in the transmission buffer based on the transmission window, transmit a reception confirmation request frame via the first wireless link or the second wireless link, and shift the transmission window such that a sequence number following a last sequence number that has been successfully received consecutively from the starting sequence number included in the reception confirmation frame corresponding to a response to the reception confirmation request frame becomes a start point.

5. The transmitting station according to claim 4,
wherein the transmission buffer control unit extracts, from among sequence numbers included in the transmission window, data for which a reception state is unreceived according to the reception success/failure information, and transmits the data via the first wireless link or the second wireless link.

6. A receiving station in an information communication system including a transmitting station, an access point with which a first wireless link with the transmitting station is established, other access point with which a second wireless link with the transmitting station is established, and the receiving station with which a third wireless link with the access point and a fourth wireless link with the other access point are established, in which traffic is distributed between the access point and the other access point, and data is transferred from the transmitting station to the receiving station, the receiving station comprising:
a rearrangement buffer unit that stores data correctly received via the third wireless link or the fourth wireless link and rearranges the data according to a sequence number; and
a reception status management unit that is configured to update reception success/failure information indicating a reception status of data based on a sequence number included in data received via the third wireless link or the fourth wireless link, transmits, in a case where a reception confirmation request frame is received, a reception confirmation frame including a starting sequence number and a bitmap via the third wireless link or the fourth wireless link based on the reception success/failure information, and set, in a case where a transmission source of the reception confirmation request frame is the transmitting station, a start point of a reception window of the rearrangement buffer unit to a starting sequence number of the reception confirmation request frame.
